# EUROPEAN PATENT SPECIFICATION

(11) **EP 3 503 504 B1**
(45) Date of publication and mention of the grant of the patent: **16.02.2022**
(21) Application number: 18207460.9
(22) Date of filing: 21.11.2018
(51) Int. Cl.: H04L 29/08, H04L 29/06, H04W 12/08

(54) **INFORMATION PROCESSING APPARATUS, INFORMATION PROCESSING METHOD, AND INFORMATION PROCESSING PROGRAM**
INFORMATIONSVERARBEITUNGSVORRICHTUNG, INFORMATIONSVERARBEITUNGSVERFAHREN UND INFORMATIONSVERARBEITUNGSPROGRAMM
APPAREIL, PROCÉDÉ ET PROGRAMME DE TRAITEMENT D'INFORMATIONS

(30) Priority: 22.12.2017 JP 2017245774
(43) Date of publication of application: 26.06.2019
(73) Proprietor: FUJITSU LIMITED, Kanagawa 211-8588 (JP)
(72) Inventor: SAKAMOTO, Takuya, Kawasaki-shi,, Kanagawa 211-8588 (JP); TAKE, Riichiro, Kawasaki-shi, Kanagawa 211-8588 (JP); NIMURA, Kazuaki, Kawasaki-shi, Kanagawa 211-8588 (JP); MATSUMOTO, Tatsuro, Kawasaki-shi, Kanagawa 211-8588 (JP)
(74) Representative: Haseltine Lake Kempner LLP

(56) References cited:
- US-A1- 2013 185 784
- US-A1- 2013 210 360
- US-A1- 2014 002 236
- US-A1- 2014 223 516
- US-A1- 2017 052 522

## Description

### FIELD OF TECHNOLOGY

The embodiments discussed herein are related to an information processing apparatus, an information processing method, and an information processing program.

### BACKGROUND

A computer system offers services using various resources. Examples of the resources used to offer the services include software resources such as data and programs, and various kinds of equipment controlled by computers.

For example, the development of Internet of Things (IoT)-related technologies have enabled various things (IoT devices) including but not limited to computers to be connected to the Internet. The IoT devices themselves and data acquired from the IoT devices are resources used to offer services.

The IoT device is available for collection of data. For example, service providers collect data on the users of their IoT devices from a lot of IoT devices via a computing system (hereinafter referred to as cloud system). The service providers may perform data mining of the collected data to acquire various kinds of knowledges.

Data collected from the IoT device includes data indicating characteristics of actions of the user who holds the IoT device. For this reason, data collected from the IoT device used by a particular user may be used by the service provider collecting the data, as well as the user himself/herself offering the data. For example, the user may offer data to a particular service provider via the IoT device, and offer the data to another service provider according to the user's will, to receive an appropriate service (for example, discount of service fee). In this case, for example, the service provider that holds data passes an access right to data concerned to another service provider, and another service provider accesses data based on the access right.

An example of the technology concerning the access right to data is OAuth. A right transfer system for performing control such that customers may share an authenticated token within the scope of customer's authentication has been also proposed. An access right management system for invalidating, transferring, dividing, and changing the access right has been also proposed. Further, a resource management system for solving problems about the use right, for example, the problem that the access right on the network may not be dynamically offered to users has been suggested. Related techniques are disclosed in, for example, Japanese Laid-open Patent Publication Nos. 2013-145505, 2004-032220, and 2003-162464. **<INSERT PAGE 2a HERE>**

### PROBLEMS TO BE SOLVED

However, according to the conventional techniques about the access right to resources managed by servers, the unit of resources, the access right of which may be managed, is fixed, which is less flexible.

### SUMMARY

The invention is defined by an information processing apparatus according to claim 1, an information processing method according to claim 5 and an information processing program according to claim 6. Further details are defined by dependent claims 2-4. Reference may be made to any of:
US 2014/223516 A1, which relates to initiating an authorization flow with a user to enable a user interface-limited client computing device to obtain access to protected resources hosted by a resource service;
US 2013/185784 A1, which relates to an authority delegate system, a server system in an authority delegate system, and a control method for controlling an authority delegate system;
US 2014/002236 A1, which relates to a door lock, and a system and method for remotely controlled access; and
US 2013/210360 A1, which relates to methods of communicating identification information and a responsive command via short-range communications, and related devices.

### BRIEF DESCRIPTION OF DRAWINGS

FIG. 1 is a view illustrating an example of a functional configuration of an apparatus according to a first embodiment;
FIG. 2 is a view illustrating an example of a configuration of a system according to a second embodiment;
FIG. 3 is a view illustrating an example of a hardware configuration of a server;
FIG. 4 is a block diagram illustrating functions of each device;
FIG. 5 is a sequence diagram illustrating a procedure of rental contract processing and driving data collection processing;
FIG. 6 is a view illustrating an example of contract data;
FIG. 7 is a view illustrating an example of driving data;
FIG. 8 is a sequence diagram illustrating an example of a procedure of processing of offering an access ticket to a server for automobile insurance service;
FIG. 9 is a sequence diagram illustrating an example of a procedure of processing of acquiring the access ticket from a server for rental car service;
FIG. 10 is a view illustrating an example of an access ticket request;
FIG. 11 is a view illustrating an example of generation of an access ticket using a template;
FIG. 12 is a sequence diagram illustrating an example of a procedure of premium estimation processing using the access ticket;
FIG. 13 is a view illustrating an example of a system according to a third embodiment;
FIG. 14 is a view illustrating an example of a system according to a fourth embodiment;
FIG. 15 is a sequence diagram illustrating an example of a procedure of driving data receiving-URL acquisition processing;
FIG. 16 is a sequence diagram illustrating an example of a procedure of driving data acquisition processing according to the fourth embodiment;
FIG. 17 is a view illustrating an example of a system according to a fifth embodiment;
FIG. 18 is a view illustrating an example of a system according to a sixth embodiment;
FIG. 19 is a view illustrating an example of a flight reservation information storage unit;
FIG. 20 is a view illustrating an example of a hotel reservation information storage unit;
FIG. 21 is a view illustrating an example of a script included in an access ticket included in flight reservation information;
FIG. 22 is a view illustrating an example of a script in the access ticket included in hotel reservation information;
FIG. 23 is a view illustrating an example of a system according to a seventh embodiment;
FIG. 24 is a view illustrating an example of a script for unlocking a door of a room;
FIG. 25 is a view illustrating an example of user registration processing according to an eighth embodiment;
FIG. 26 is a view illustrating a use state of an access ticket according to the eighth embodiment;
FIG. 27 is a view illustrating an example of a system having a function of limiting the user of the access ticket;
FIG. 28 is a view illustrating an example of an access ticket request including a service ID;
FIG. 29 is a view illustrating an example of the access ticket including the service ID;
FIG. 30 is a sequence diagram illustrating an example of a procedure of premium estimation processing using the access ticket according to the eighth embodiment;
FIG. 31 is a view illustrating an example of a system according to a ninth embodiment;
FIG. 32 is a view illustrating an example of an access ticket including the script ID; and
FIG. 33 is a sequence diagram illustrating an example of a procedure of premium estimation processing using the access ticket according to a ninth embodiment.

### DESCRIPTION OF EMBODIMENTS

Embodiments will be described below with reference to figures. The embodiments may be combined so as not to cause contradiction.

### [First embodiment]

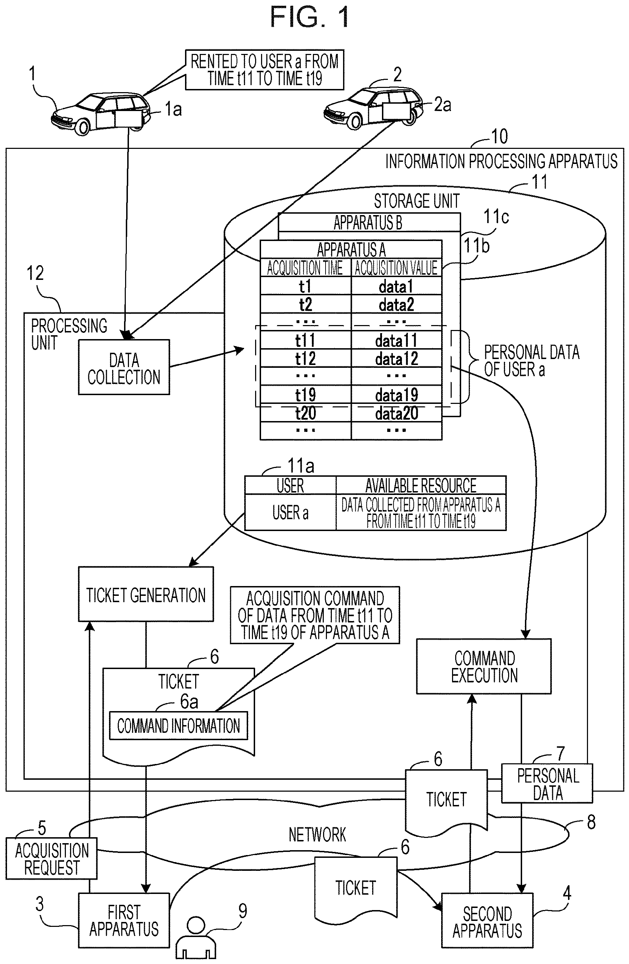

First, a first embodiment is described. FIG. 1 is a view illustrating an example of a functional configuration of an apparatus according to the first embodiment. A network 8 is connected to an information processing apparatus 10, a first apparatus 3, and a second apparatus 4.

The information processing apparatus 10 manages resources that are available to a user 9. For example, the information processing apparatus 10 periodically collects data on the state of automobiles 1, 2 from IoT devices 1a, 2a mounted in automobiles 1, 2, respectively, which are rented as rental cars. Examples of the data on the state of the automobiles 1, 2 include data on position, speed, and acceleration of the automobiles 1, 2. In the case where the automobile 1 is rented to the user 9 for a predetermined period, data collected from the automobile 1 during the period is personal data 7 on the user 9, and is resources available to the user 9.

To manage an access right to the resources available to the user 9, the information processing apparatus 10 has a storage unit 11 and a processing unit 12. For example, the storage unit 11 is a memory or a storage device of the information processing apparatus 10. For example, the processing unit 12 is a processor or an arithmetic circuit of the information processing apparatus 10.

The storage unit 11 stores available resource information 11a indicating resources available to the user 9. For example, the available resource information 11a indicates that data collected from the IoT device 1a mounted in the automobile 1 in the period in which the automobile 1 is rented to the user 9, as user-available resources. The storage unit 11 stores data collected from the IoT devices 1a, 2a (acquired data 11b, 11c).

When receiving an acquisition request 5 of a ticket 6 indicating a use right of the resources available to the user from the first apparatus 3, the processing unit 12 generates the ticket 6 including command information 6a indicating a command about the use of the resources, based on the available resource information 11a. The command information 6a is, for example, a script including one or more commands. The command information 6a may be an identifier associated with the command (command ID). For example, the command about the use of the resource is an acquisition command to acquire the personal data 7 on the user 9 from the storage unit 11. The processing unit 12 transmits the generated ticket 6 to the first apparatus 3.

After that, when receiving the ticket 6 from the second apparatus 4 obtained the ticket 6 via the first apparatus 3, the processing unit 12 executes a command indicated by the command information 6a included in the ticket 6. For example, if the command information 6a is the script, the processing unit 12 executes the command described in the script. If the command information 6a is the command ID, the processing unit 12 executes the command corresponding to the command ID. For example, if the command indicated by the command information 6a is the command to acquire the personal data 7 on the user 9, the processing unit 12 acquires the personal data 7 on the user 9 from the storage unit 11. Then, the processing unit 12 transmits the acquired personal data 7 to the second apparatus 4.

According to an instruction of the user 9, the first apparatus 3 acquires the ticket 6 from the information processing apparatus 10, and transfers the ticket 6 to a party (second apparatus 4) permitted to use the resource available to the user 9. The first apparatus 3 is, for example, a terminal device used by the user 9.

When receiving the ticket 6, the second apparatus 4 transmits the ticket 6 to the information processing apparatus 10, and causes the information processing apparatus 10 to execute the command indicated by the command information 6a in the ticket 6. If the command indicated by the command information 6a is the command to acquire the personal data 7 on the user 9, the second apparatus 4 receives the personal data 7 as an execution result of the command from the information processing apparatus 10. The second apparatus 4 uses the received personal data 7 to offer a service to the user 9.

With such system, the command may designate the resource, the use right of which is given to the second apparatus 4, based on the ticket 6. Thus, any right may be flexibly managed according to the request of the user 9. That is, if the command executed by the processing unit 12 is a command to acquire data, data to be acquired may be arbitrarily designated by designation of an argument. For this reason, by causing the information processing apparatus 10 to execute the command, only data that satisfies a particular search condition may be acquired from the storage unit 11. For example, according to the instruction of the user 9, the processing unit 12 may include the command information 6a indicating a command to acquire only some personal data designated by the user 9, rather than all personal data on the user 9, in the ticket 6.

The resources available to the user may be equipment connected to the information processing apparatus 10 via the network 8. In this case, when receiving the acquisition request from the first apparatus 3, the processing unit 12 generates a ticket including command information indicating a command to control the equipment (control command), and transmits the ticket to the first apparatus 3. When receiving the ticket transmitted to the first apparatus 3 from the second apparatus 4, the processing unit 12 controls the equipment based on the command indicated by the command information included in the received ticket.

For example, it is assumed that a door is unlocked by remote control. In this case, the available resource information 11a indicates a room available to the user 9. The equipment to be controlled is a locking device for looking and unlocking a door of the room. The processing unit 12 generates a ticket including command information indicating a command to instruct the equipment to unlock the door. For example, if the user 9 who owns the first apparatus 3 rents the room, the user 9 acquiring the ticket transmits the ticket for unlocking the door from the first apparatus 3 to the second apparatus 4 owned by a renter of the room. This enables the renter to enter into the room.

By use of the ticket 6, the resources managed by the information processing apparatus 10 may be used from the second apparatus 4, which is highly convenient. On the contrary, if the ticket 6 is wrongly used, the resources managed by the information processing apparatus 10 are in danger.

For example, if the command information 6a included in the ticket 6 is rewritten after issuance of the ticket 6, there is a risk of access to data other than the personal data 7 on the user 9 in the storage unit 11. Thus, when receiving the acquisition request from the first apparatus 3, the processing unit 12 encodes (or encrypt) the command information 6a, and generate the ticket 6 including the encoded command information 6a. In this case, when receiving the ticket 6 from the second apparatus 4, the processing unit 12 decodes (or decrypt) the encoded command information 6a in the ticket 6, and executes the command indicated by the decoded command information 6a. In this manner, any unauthorized access to data stored in the storage unit 11 may be suppressed.

A device capable of using the ticket 6 may be limited. For example, when receiving the acquisition request from the first apparatus 3, the processing unit 12 generates the ticket 6 including an identifier identifying the second apparatus 4 that may use the ticket 6, and transmits the ticket 6 to the first apparatus 3. Further, when receiving the ticket 6, the processing unit 12 authenticates that a source of the ticket 6 is the second apparatus 4 corresponding to the identifier and then, executes the command. If the processing unit 12 does not correctly authenticates it, the processing unit 12 suppresses the execution of the command. Thereby, the processing unit 12 may execute the command only when the ticket 6 is transmitted from a previously designated device, to suppress unintended use of the ticket 6.

To suppress a database structure in the storage unit 11 being analyzed due to a leakage of the executed command, only the command ID may be included as the command information 6a in the ticket 6. In this case, the storage unit 11 previously stores a correspondence table (not illustrated) in which command IDs are associated with respective command IDs, and when receiving the acquisition request 5, the processing unit 12 generates the ticket 6 indicating the command ID corresponding to the command as the command information 6a, and transmits the ticket 6 to the first apparatus 3. Further, when receiving the ticket 6 including the command ID from the second apparatus 4, the processing unit 12 executes the command corresponding to the command ID included in the ticket 6. Thereby, the command may be suppressed from being disclosed to the outside of the information processing apparatus 10 such that the database structure in the storage unit 11 is analyzed based on the ticket 6.

### [Second embodiment]

Next, a second embodiment is described. According to the second embodiment, data collected by a particular service provider from IoT devices using the cloud system may be offered from any user having the IoT device to other service providers.

Here, before describing details of the second embodiment, the importance of use of data collected using the IoT device is described.

Personal data such as a search history and a product purchase history of a particular consumer on the Internet has been increasingly utilized. For example, based on the personal data, the consumer's interests and consumption tendency may be found to present goods that are likely to attract the attention of the consumer. In addition, the movement called IoT has occurred and thus, computers connected to the Internet may collect more personal data by means of various cameras and sensors. Meanwhile, since the collected data is information about a particular user, it is conceivable that the service provider that collected data as well as the user concerned have a right to use the data. Thus, there is a demand for a system that may offer data collected by one service provider to other service providers in response to a user's instruction.

As an example, an automobile insurance that analyzes driving data collected from an IoT device mounted in an automobile, and calculates a premium paid by an owner of the automobile has recently provided. Such insurance is referred to as telematics insurance. In the case where the telematics insurance is applied to a driver of a rental car or user of a shared car service, only driving data of a particulate user, rather than driving data of all automobiles, are required to be offered from a provider or the rental car or the shared car service to a provider of an automobile insurance service.

The OAuth is a mechanism for achieving data access between servers that are service providers based on the user's permission. According to the OAuth, only data access between servers having a fiduciary relationship is possible. In addition, according to the OAuth, the user accesses a server that receives data and performs a user authentication, checks the scope of an access right given to the server and then, permits access to the data. In the case of the telematics insurance, if the user wants to estimate expenses of a plurality of automobile insurance services via a service broker, the user has to access a plurality of servers corresponding to the plurality of automobile insurance services, and give a permission for access to each of the servers. This brings the user much time and efforts. Alternatively, the service broker may acquire driving data, and send the driving data to the plurality of servers corresponding to the plurality of automobile insurance services. However, in this case, the service broker that does not use the driving data handles the data. As more persons handle the driving data, the possibility of leakage of the driving data becomes higher, putting the driving data in danger.

By encoding data and issuing a license including a key for decoding the encoded data, only a licensee may access the data. According to this method, a timing at which the right to access the data is given may not be synchronized with a timing at which data is accessed. However, during the operation of service, data to be collected may be added or deleted to change available data. In offering encoded data, each time data is changed, it is required to encode data to be disclosed again, making processing complicated.

A system capable of easily passing driving data held by a rental car service provider to an automobile insurance service provider of the telematics insurance according to the user's judgement is described below.

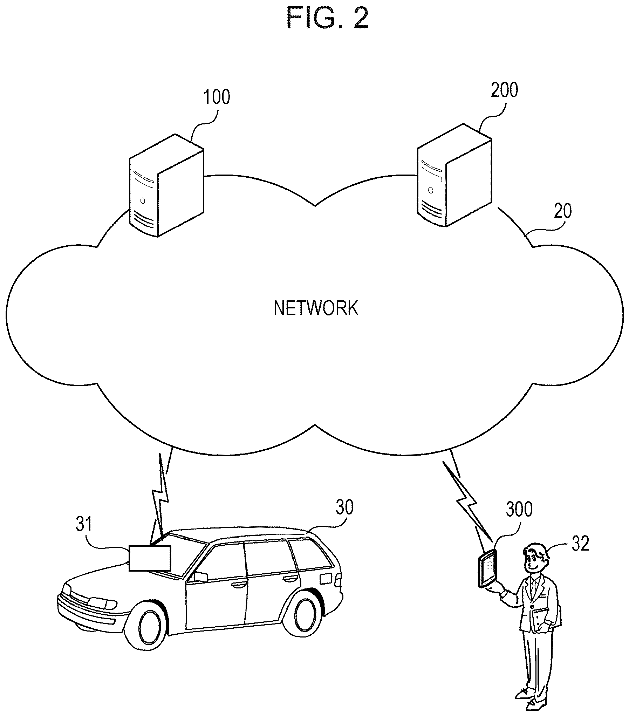

FIG. 2 is a view illustrating an example of a configuration of the system according to the second embodiment. A server 100 of the rental car service provider is connected to a server 200 of the automobile insurance service provider via a network 20. An IoT device 31 is mounted on an automobile 30 rented by the rental car service.

The IoT device 31 generates driving data that records the driving state of the automobile 30. For example, the IoT device 31 records temporal changes such as position, speed, and acceleration of the automobile 30 as driving data in an internal storage device. The IoT device 31 is connected to the network 20 via a wireless communication network. Then, the IoT device 31 transmits the driving data to the server 100. For example, a car navigation may be used as the IoT device 31.

A user 32 who attempts to obtain the telematics insurance owns a terminal apparatus 300. The terminal apparatus 300 is, for example, a mobile terminal apparatus such as a smart phone. The terminal apparatus 300 may be a personal computer. The terminal apparatus 300 is connected to the network 20 in a wired or wireless manner. The terminal apparatus 300 may communicate with the server 100, 200 via the network 20.

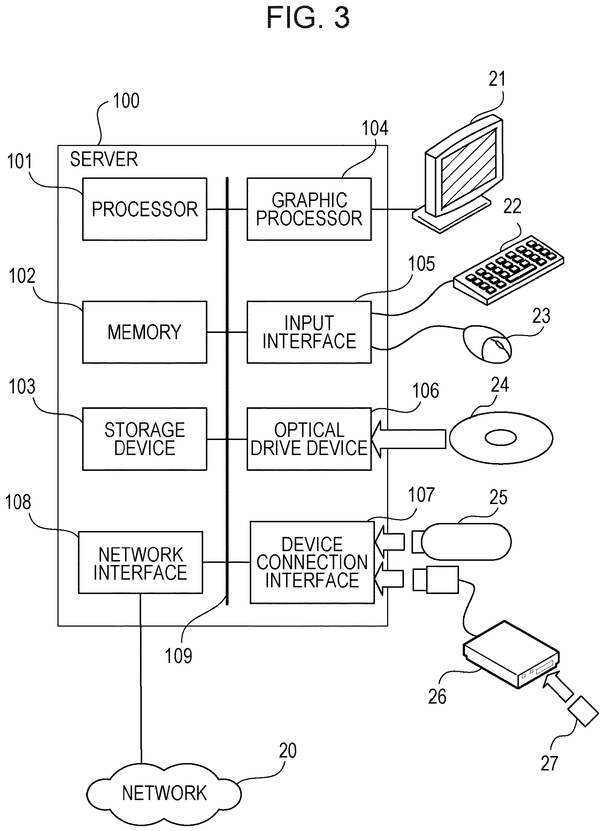

FIG. 3 is a view illustrating an example of a hardware configuration of the server. The server 100 is controlled by a processor 101 as a whole. The processor 101 is connected to a memory 102 and a plurality of peripheral devices via a bus 109. The processor 101 may be a multi-processor. Examples of the processor 101 include a central processing unit (CPU), a micro processing unit (MPU), or a digital signal processor (DSP). At least some of functions implemented by causing the processor 101 to run a program may be implemented by an electronic circuit such as application specific integrated circuit (ASIC), programmable logic device (PLD), or the like.

The memory 102 is used as a main storage device of the server 100. At least some of programs of operating system (OS) and application programs executed by the processor 101 are temporarily stored in the memory 102. Various kinds of data used for the processing of the processor 101 is stored in the memory 102. For example, a volatile semiconductor storage device such as a random access memory (RAM) is used as the memory 102.

The peripheral devices connected to the bus 109 are a storage device 103, a graphic processor 104, an input interface 105, an optical drive device 106, a device connection interface 107, and a network interface 108.

The storage device 103 electrically or magnetically writes and reads data to and from a built-in recording medium. The storage device 103 is used as an auxiliary storage device of the computer. OS programs, application programs, and various kinds of data are stored in the storage device 103. For example, the hard disk drive (HDD) or the solid state drive (SSD) is used as the storage device 103.

The graphic processor 104 is connected to a monitor 21. According to a command from the processor 101, the graphic processor 104 displays an image on the monitor 21. A display device such as a display device using organic electro luminescence (EL) or a liquid crystal display device is used as the monitor 21.

The input interface 105 is connected to a keyboard 22 and a mouse 23. The input interface 105 transmits signals sent from the keyboard 22 and the mouse 23 to the processor 101. The mouse 23 is an example of a pointing device and however, any other pointing device may be used. Examples of the other pointing device include touch panel, tablet, touch pad, and track ball.

The optical drive device 106 uses laser light or the like to read recorded in an optical disc 24. The optical disc 24 is a portable recording medium that records data such that the data may be read by light reflection. Examples of the optical disc 24 include digital versatile disc (DVD), DVD-RAM, compact disc read only memory (CD-ROM), and CD-R (Recordable)/RW (ReWritable).

The device connection interface 107 is a communication interface for connecting the peripheral devices to the server 100. For example, the device connection interface 107 may be connected to a memory device 25 or a memory reader/writer 26. The memory device 25 is a recording medium having a function of communicating with the device connection interface 107. The memory reader/writer 26 is a device for writing data to a memory card 27 or read data from the memory card 27. The memory card 27 is a card-type recording medium.

The network interface 108 is connected to the network 20. The network interface 108 exchanges data with other computers or communication equipment via the network 20.

The above-mentioned hardware configuration may implement the processing of the server 100 according to the second embodiment. The hardware configuration as the server 100 may also implement the processing of the server 200 and the terminal apparatus 300. If the terminal apparatus 300 is the mobile terminal device, the terminal apparatus 300 includes a wireless communication interface using radio waves, in addition to the hardware illustrated in FIG. 3. The IoT device 31 includes the same hardware configuration as the server 100, a wireless communication interface using radio waves, a receiver for satellite positioning system, and an acceleration sensor. The same hardware as the server 100 illustrated in FIG. 3 may also implement the information processing apparatus 10 according to the first embodiment.

The servers 100, 200 and the terminal apparatus 300 execute the program recorded in a computer-readable recording medium, to implement the processing according to the second embodiment. The program describing contents of the processing executed by each of the servers 100, 200 and terminal apparatus 300 may be recorded in various recording media. For example, the program executed by the server 100 may be stored in the storage device 103. The processor 101 loads at least a portion of the program in the storage device 103 into the memory 102, and executes the program. The program executed by the server 100 may be recorded in a portable recording medium such as the optical disc 24, the memory device 25, or the memory card 27. The program stored in the portable recording medium is installed in the storage device 103 under control of the processor 101 and then, becomes executable. The processor 101 may read the program directly from the portable recording medium, and execute the program.

Next, functions of each device to estimate the premium of the telematics insurance based on driving data collected while the user 32 drives the automobile 30 provided by the rental car service are described.

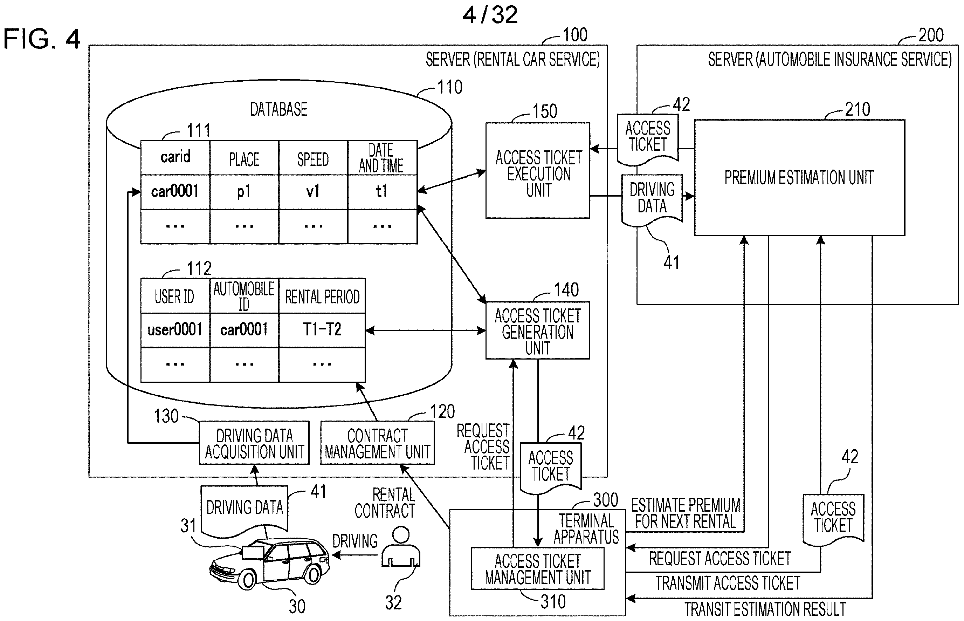

FIG. 4 is a block diagram illustrating the functions of each device. The server 100 for rental car service has a database 110, a contract management unit 120, a driving data acquisition unit 130, an access ticket generation unit 140, and an access ticket execution unit 150.

The database 110 stores a use history of the user 32 about the automobile 30, and driving data 41 acquired when the user 32 was driving the automobile 30. The driving data 41 is a collection of measurement values (automobile state measurement values) indicating the state of the automobile 30 periodically measured while the user 32 drives the automobile 30. The automobile state measurement values include the speed of the automobile 30 at respective measurement time points and so on, and the driving tendency of the user 32 may be analyzed based on information about the speed and so on, which is indicated by each of the plurality of automobile state measurement values. For example, a portion of a storage area of the memory 102 or the storage device 103 is used as the database 110. In the example illustrated in FIG. 4, the database 110 stores a driving data management table 111 and a user management table 112. The driving data management table 111 is a data table for managing the driving data 41. In the driving data management table 111, an identifier (automobile ID) of the automobile 30 is associated with place, speed, date and time of the automobile 30. The user management table 112 is a table for managing the user 32 using the rental car service. In the user management table 112, an identifier (user ID) of the user 32 is associated with the automobile ID and the rental period of the automobile 30 used by the user 32.

The contract management unit 120 executes processing of concluding a rental contract of the automobile 30 with the user 32. For example, in response to a request of the rental contract from the terminal apparatus 300 held by the user 32, the contract management unit 120 establishes the rental contract. If lending of the automobile 30 to the user 32 is established, the contract management unit 120 registers a record that indicates contents of the rental contract in the user management table 112.

The driving data acquisition unit 130 acquires the driving data 41 in a period when the user 32 was driving the automobile 30, from the automobile 30. The driving data 41 includes, for example, place (latitude and longitude), speed, and time and date of the automobile 30 measured at regular intervals. The driving data acquisition unit 130 stores the acquired driving data 41 in the driving data management table 111.

In response to a request of an access ticket from the terminal apparatus 300, the access ticket generation unit 140 generates an access ticket 42 for permitting an access to the driving data 41 in the period when the user 32 was using the automobile 30. The access ticket 42 includes a script (a string of one or more commands) describing the processing of acquiring the driving data 41 in the period when the user 32 was using the automobile 30 from the database 110. The access ticket generation unit 140 transmits the generated access ticket 42 to the terminal apparatus 300.

When receiving the access ticket 42 from the server 200 for automobile insurance service, the access ticket execution unit 150 executes the script included in the access ticket 42, thereby acquiring the driving data 41 from the database 110. The access ticket execution unit 150 transmits the acquired driving data 41 to the server 200.

The server 200 for automobile insurance service has a premium estimation unit 210. Based on the driving data 41, the premium estimation unit 210 calculates the premium of the automobile insurance offered to the user 32. For example, when acquiring a premium estimation request at next use of a rental car from the terminal apparatus 300 used by the user 32, the premium estimation unit 210 transmits the access ticket request to the terminal apparatus 300. When acquiring the access ticket 42 from the terminal apparatus 300, the premium estimation unit 210 transmits the access ticket to the server 100. When further receiving the driving data 41 from the server 100, the premium estimation unit 210 calculates the premium based on the driving data 41. The premium estimation unit 210 transmits the calculated premium as an estimation result to the terminal apparatus 300.

Line connecting the elements to each other in FIG. 4 illustrate some of communication paths, and communication paths other than the illustrated paths may be set. Functions of the elements illustrated in FIG. 4 may be implemented by causing the computer to execute program modules corresponding to the elements.

A procedure of premium estimation processing executed by the system illustrated in FIG. 4 is described below in the execution order of the processing.

First, rental contract processing and driving data collection processing are described.

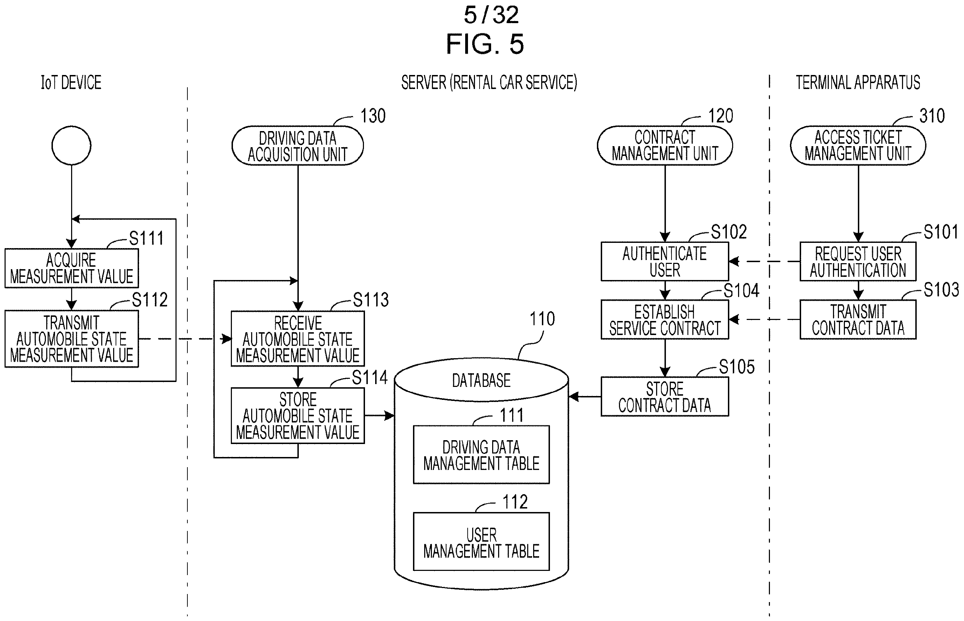

FIG. 5 is a sequence diagram illustrating a procedure of the rental contract processing and the driving data collection processing. First, using an access ticket management unit 310 of the terminal apparatus 300, the user 32 accesses the server 100 for rental car service. Then, the user 32 inputs authentication information such as a set of a user ID and a password of the user 32 to the terminal apparatus 300. Then, the access ticket management unit 310 transmits a user authentication request including the authentication information to the server 100 for rental car service (Step S101).

In response to the user authentication request, the contract management unit 120 of the server 100 performs the user authentication (Step S102). For example, the contract management unit 120 determines whether or not the authentication information included in the user authentication request matches user information (set of user ID and password) previously registered in the server 100. If the authentication information matches the user information, the contract management unit 120 determines that the user 32 using the terminal apparatus 300 is a valid user corresponding to the matched user information. When determining that the user 32 is the valid user, the contract management unit 120 notifies that the user authentication succeeded to the terminal apparatus 300.

When the user authentication succeeds, the access ticket management unit 310 transmits contract data indicating a service contract proposal to the server 100 (Step S103). For example, the access ticket management unit 310 selects the automobile 30 and designates the rental period via a Web browser, and transmits the contract data.

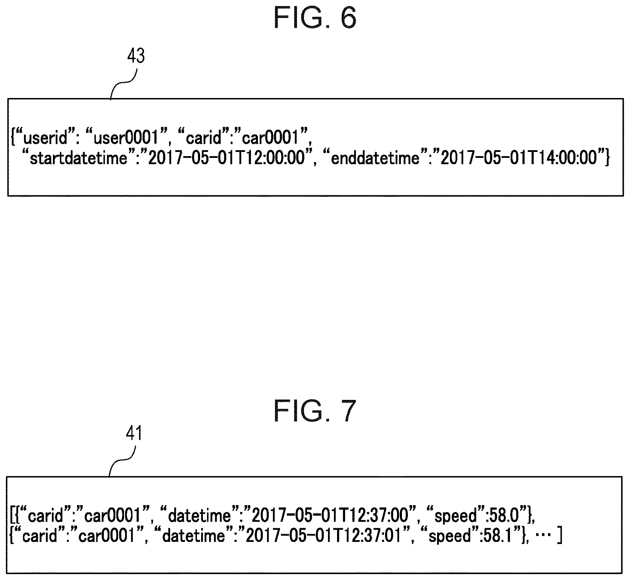

FIG. 6 is a view illustrating an example of the contract data. Contract data 43 includes the user ID "user0001" of the user 32, the automobile ID "car0001" of the automobile 30, the use start data and time "2017-05-01T12:00:00", and the use end data and time "2017-05-01T14:00:00".

Hereinafter, description is made with reference to FIG. 5.

The contract management unit 120 of the server 100 receives the contract data 43 from the authenticated user, and if the designated automobile 30 may be rented in the designated period, establishes the service contract (Step S104). Next, the contract management unit 120 stores the contract data 43 in the database 110 (Step S105). For example, the contract management unit 120 registers the record including information indicated by the contract data 43, in the user management table 112.

In this manner, the rental contract processing is executed, and the user 32 will use the automobile 30 during the rental period. When the user 32 uses the automobile 30, the states of the automobile (place, speed, date and time) are measured with a sensor and a communication device in the automobile 30.

The IoT device 31 periodically measures the automobile states (place, speed, date and time), and acquires the automobile state measurement values (Step S111). Then, the IoT device 31 transmits the automobile state measurement values to the server 100 (Step S112).

In the server 100, the driving data acquisition unit 130 receives the automobile state measurement values (Step S113). The driving data acquisition unit 130 stores the acquired automobile state measurement values in the database 110 (Step S114). For example, the driving data acquisition unit 130 registers the acquired automobile state measurement values and the automobile ID of the automobile 30 as one record, in the driving data management table 111.

The automobile state measurement values are repeatedly accumulated while the user 32 uses the automobile 30 (rental period), and a collection of the accumulated automobile state measurement values becomes the driving data 41 on the user 32.

FIG. 7 is a view illustrating an example of the driving data. The driving data 41 includes the automobile state measurement values at each measurement time. The automobile state measurement values include information on automobile ID, measurement date and time, and speed of the automobile 30.

After that, when the user 32 rents the rental car again and obtains the automobile insurance, the user 32 uses the access ticket management unit 310 of the terminal apparatus 300 to access the server 200 for automobile insurance service. The automobile insurance of the server 200 offers the driving data, thereby notifying a change in the premium of the automobile insurance to the user, urging the user to offer the access ticket 42. Using the access ticket management unit 310 of the terminal apparatus 300, the user 32 that received the notification accesses the server 100 for rental car service and acquire the access ticket 42. Then, using the access ticket management unit 310 of the terminal apparatus 300, the user 32 transmits the access ticket 42 to the server 200 for automobile insurance service.

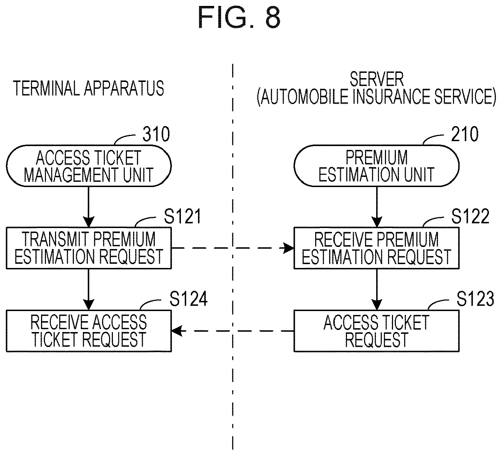

With reference to FIGs. 8 to 11, the processing of acquiring the access ticket 42 from the server 100 for rental car service is described below in detail.

FIG. 8 is a sequence diagram illustrating an example of a procedure of processing of offering the access ticket to the server for automobile insurance service.

The access ticket management unit 310 of the terminal apparatus 300 transmits a premium estimation request to the server 200 for automobile insurance service (Step S121). In the server 200, the premium estimation unit 210 receives the premium estimation request (Step S122). When receiving the premium estimation request, the premium estimation unit 210 transmits the access ticket request on the driving data 41 to the terminal apparatus 300 (Step S123). The access ticket management unit 310 of the terminal apparatus 300 receives the access ticket request (Step S124). If the access ticket management unit 310 has not received the access ticket 42 yet at this time, the access ticket management unit 310 acquires the access ticket 42.

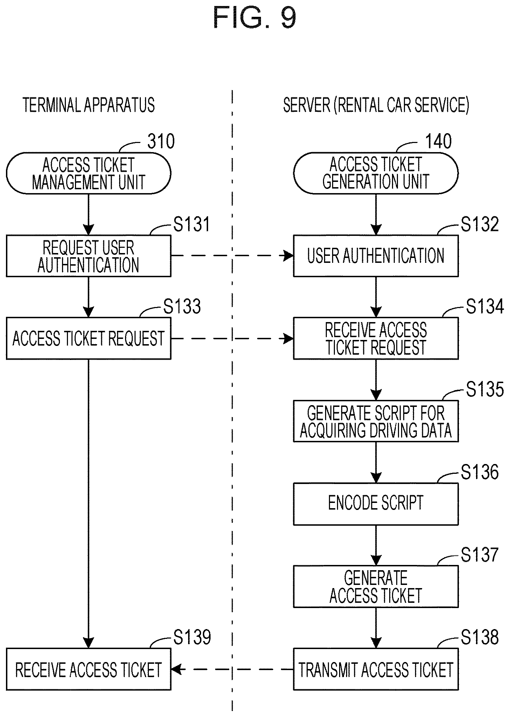

FIG. 9 is a sequence diagram illustrating an example of a procedure of processing of acquiring the access ticket from the server for rental car service.

The access ticket management unit 310 of the terminal apparatus 300 transmits the user authentication request including the authentication information (the user ID and the password of the user 32) inputted from the user 32 to the server 100 for rental car service (Step S131). Based on the authentication information indicated in the user authentication request, the access ticket generation unit 140 of the server 100 performs the user authentication (Step S132). When the user authentication succeeds, the access ticket generation unit 140 transmits information indicating log-in to the terminal apparatus 300. In this manner, the user 32 logs in to the server 100.

When logging in to the server 100, the user 32 instructs the access ticket management unit 310 to transmit the access ticket request. For example, the access ticket management unit 310 acquires history information indicating that the user 32 used the rental car service from the server 100, and displays the history information. The user 32 selects a desired period of driving data from the displayed history information. Then, the access ticket management unit 310 transmits the access ticket request designating the selected period to the server 100 (Step S133).

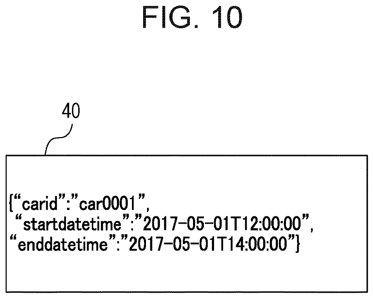

FIG. 10 is a view illustrating an example of the access ticket request. An access ticket request 40 includes the automobile ID of the automobile 30 used by the user 32 and the start date and time and the end date and time in the designated period of acquired driving data.

Hereinafter, description is made with reference to FIG. 9 again. The access ticket generation unit 140 of the server 100 for rental car service receives the access ticket request (Step S134). Next, the access ticket generation unit 140 generates a script for acquiring the driving data 41 on the user 32 in the designated period from the database 110 (Step S135). At this time, to not generate any unauthorized request, the access ticket generation unit 140 may confirm that the user 32 used the automobile 30 as a source for the driving data 41 in the designated period. For example, since the access ticket generation unit 140 recognizes the user ID of the user 32 through the user authentication, the access ticket generation unit 140 searches the user management table 112 based on the user ID and the automobile ID of the automobile 30. If the period indicated in the access ticket request falls within the rental period indicated in the record acquired as a search result, the access ticket generation unit 140 determines that the automobile 30 was rented to the user 32 in the designated period.

After generating the script, the access ticket generation unit 140 generates a key for encoding, and encodes the script using the key (Step S136). The access ticket generation unit 140 stores the key used for encoding in the memory 102 or the storage device 103. The key used for encoding is also used for decoding of the script.

Next, the access ticket generation unit 140 generates the access ticket 42 including the encoded script in payload (Step S137). Then, the access ticket generation unit 140 transmits the generated access ticket 42 to the terminal apparatus 300 (Step S138). In the terminal apparatus 300, the access ticket management unit 310 receives the access ticket 42 (Step S139).

In this manner, the user 32 may acquire the access ticket 42 about the driving data 41 in any period. The access ticket generation unit 140 may generate the access ticket 42, for example, by using a template.

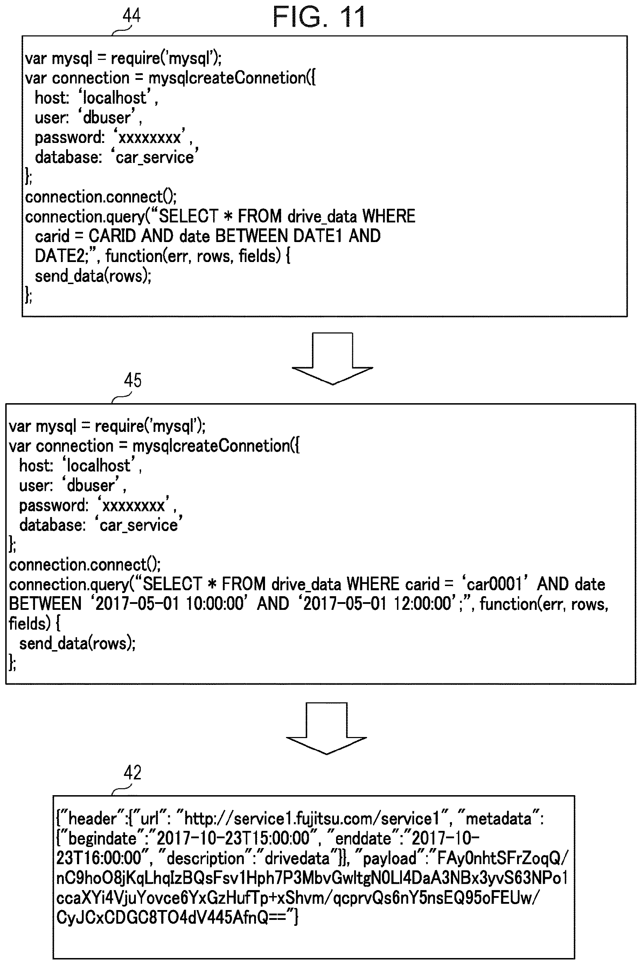

FIG. 11 is a view illustrating an example of the access ticket using a template. For example, the server 100 stores a template 44 for generating the access ticket 42 in the storage device 103. The template 44 represents a script that instructs acquisition of driving data including temporary values of the automobile ID of the automobile 30 and the start date and time and the end date and time in the target acquisition period of driving data. The access ticket generation unit 140 replaces the temporary values of the template 44 with values indicated in the access ticket request, thereby generating a script 45 corresponding to the access ticket request. In the example illustrated in FIG. 11, items described as "CARID", "DATE1", and "DATE2" in the template 44 are replaced with the automobile ID of the automobile, the start date and time in the target acquisition period, and the end date and time in the target acquisition period, respectively.

The script 45 illustrated in FIG. 11 is described in JavaScript (registered trademark), and accesses a database managed by MySQL. The script 45 may be described in any language other than JavaScript (registered trademark). The script 45 describes processing of acquiring data stored in the driving data management table 111 of the database 110 in the server 100 for rental car service. The script 45 designates automobile ID "car0001" and period "2017/5/110:00-12:00" as acquisition conditions.

After generating the script 45, the access ticket generation unit 140 generates the access ticket 42 including a header and a payload. The header includes, for example, uniform resource locator (URL) identifying the access ticket execution unit 150 in the server 100. The header includes the start date and time and the end date and time in an effective period of the access ticket 42. The encoded script 45 is set to the payload of the access ticket 42.

In this manner, the access ticket 42 may be easily generated using the template 44. A method of designating the source for the driving data 41 using the access ticket 42 is not limited to URL.

When acquiring the access ticket, the terminal apparatus 300 offers the access ticket 42 to the server 200 for automobile insurance service. Using the access ticket 42, the server 200 acquires the driving data 41 on the user 32 from the server 100 for rental car service, and estimates the premium based on the driving data 41.

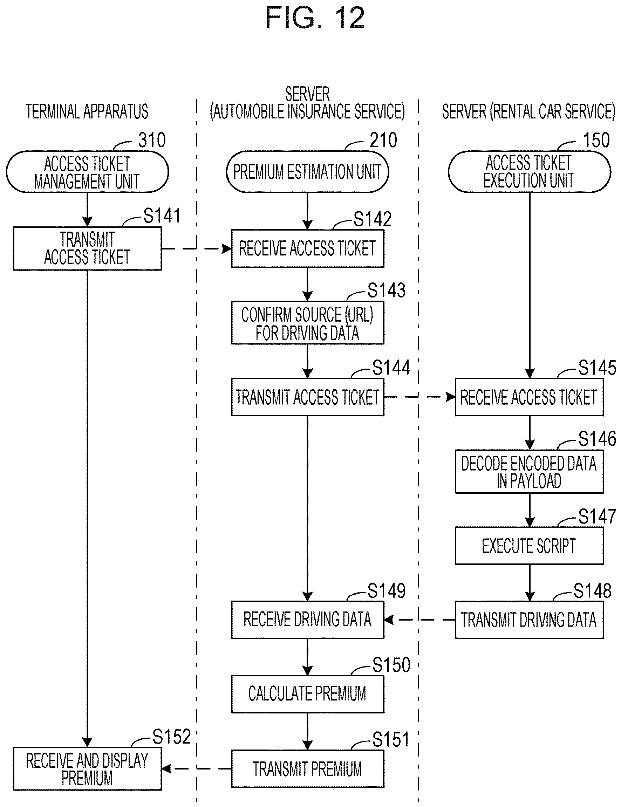

FIG. 12 is a sequence diagram illustrating an example of a procedure of the premium estimation processing using the access ticket. In response to the access ticket request from the server 200 for automobile insurance service (see FIG. 10), the access ticket management unit 310 of the terminal apparatus 300 transmits the access ticket 42 acquired from the server 100 to the server 200 (Step S141). The premium estimation unit 210 of the server 200 receives the access ticket 42 (Step S142).

When receiving the access ticket 42, the premium estimation unit 210 confirms the source (URL) for the driving data 41 according to the header of the access ticket 42 (Step S143). The premium estimation unit 210 transmits the access ticket 42 to the access ticket execution unit 150 in the server 100 as the source for the driving data 41 (Step S144).

The access ticket execution unit 150 receives the access ticket 42 (Step S145). Using a key stored in the memory 102 or the storage device 103, the access ticket execution unit 150 decodes encoded data set in the payload of the received access ticket 42 (Step S146). The decoding generates the script 45 describing a statement for acquiring the driving data 41 (see FIG. 11). The access ticket execution unit 150 executes the decoded script 45 (Step S147). The access ticket execution unit 150 may execute the script 45 to acquire the driving data 41 on the user 32 from the database 110. The access ticket execution unit 150 transmits the acquired driving data 41 to the server 200 (Step S148).

The premium estimation unit 210 of the server 200 receives the driving data 41 (Step S149). The premium estimation unit 210 calculates the premium concerning possible accidents occurring during driving of the rental car by the user 32, based on the received driving data 41 (Step S150). For example, when determining that the user 32 tends to drive carefully according to the driving data 41, the premium estimation unit 210 estimates a low premium. When determining that the user 32 tends to drive carelessly according to the driving data 41, the premium estimation unit 210 estimates a high premium. The driving tendency of the user 32 is determined based on presence/absence of rapid acceleration, level of compliance with regulation speed.

When calculating the premium, the premium estimation unit 210 transmits a calculation result of the premium to the terminal apparatus 300 (Step S151). The access ticket management unit 310 of the terminal apparatus 300 receives an estimation result of the premium, and displays the premium on a monitor (Step S152).

In this manner, the access ticket 42 may give an access right to the driving data 41 on the user 32 to the server 200 for automobile insurance service. In the access ticket 42, the scope of the access right may be set using the script in more detail. For example, an SQL statement may limit data to be accessed. This enables highly flexible access right management.

Encoding the script in the access ticket 42 ensures the security of the driving data acquired though the script. That is, the script in the access ticket 42 is a command executed by the server 100 issuing the access ticket 42, even if the script is viewed by a third party, no data is leaked. However, since the command contains information on the SQL, the internal structure of the database 110 may be grasped, or ID information contained in the SQL may provide a hint for hacking. Therefore, encoding the script may suppress information that is a hint for hacking from leaking to any unauthorized third party, further improving the security of data in the database 110.

Moreover, only the server 100 may hold the key for encoding and decoding. Thus, there is less likely that the encoded script is illegally decoded by leakage of the key.

In an embodiment not covered by the claimed invention, the script may not be encoded at generation of the access ticket 42, but communication between servers may be encoded. For example, communication between servers may be encoded by hypertext transfer protocol secure (HTTPS) commonly used in Web services.

### [Third embodiment]

Next, a third embodiment is described. According to the third embodiment, the access right to the driving data 41 on the user 32 is given to a plurality of automobile insurance service providers via the insurance service broker.

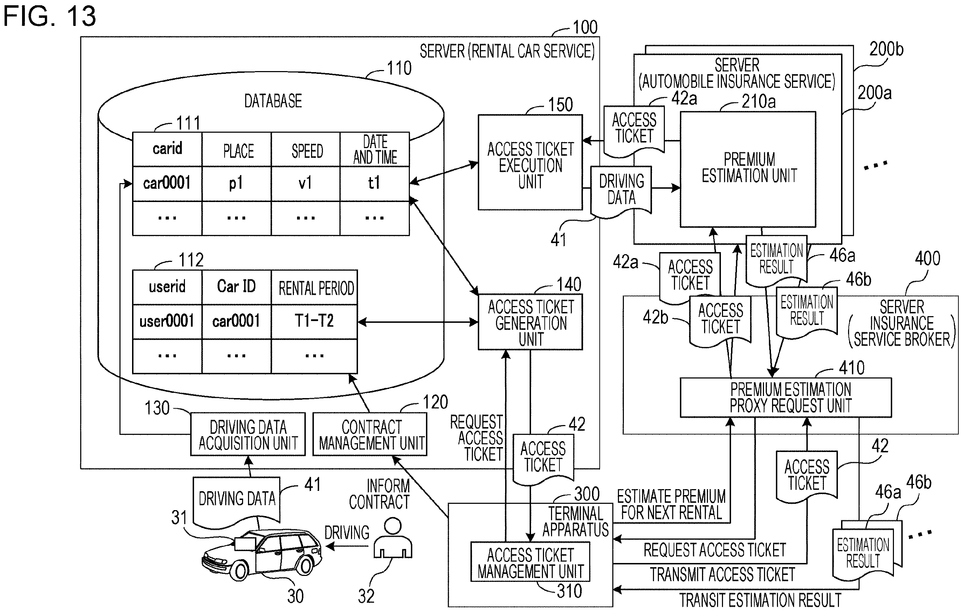

FIG. 13 is a view illustrating an example of a system according to the third embodiment. A difference between the third embodiment and the second embodiment is that the user 32 does not directly access the server 200 for automobile insurance service, and a server 400 prepared by the insurance service broker is used instead.

At estimation of the premium, the user 32 uses the terminal apparatus 300 to access the server 400 for insurance service broker. The user 32 requests premium estimation for next rental from the terminal apparatus 300 to the server 400. The request of premium estimation is received by a premium estimation proxy request unit 410 of the server 400. The premium estimation proxy request unit 410 transmits the access ticket request to the terminal apparatus 300. In response to the access ticket request, the terminal apparatus 300 acquires the access ticket 42 from the server 100 for rental car service. Details of the acquisition processing of the access ticket 42 are the same as those in the second embodiment.

The terminal apparatus 300 transmits the acquired access ticket 42 to the server 400 for insurance service broker. Then, the premium estimation proxy request unit 410 of the server 400 transmits access tickets 42a, 42b, ... to respective servers 200a, 200b, ... of the plurality of automobile insurance service providers.

When receiving the access ticket 42a, the server 200a transmits the access ticket 42a to the server 100 for rental car service, and acquires the driving data 41 from the server 100. Similarly, other servers 200b, ... for automobile insurance service transmit the acquired access ticket 42b to the server 100 to acquire the driving data 41. Based on the driving data 41, the servers 200a, 200b, ... calculate premiums according to standards in the automobile insurance service-offering companies that manage the respective servers 200a, 200b, .... The servers 200a, 200b, ... transmit the calculated premiums as estimation results 46a, 46b, ... to the server 400 of the insurance service broker.

In the server 400, the premium estimation proxy request unit 410 receives the estimation results 46a, 46b, ... from the plurality of servers 200a, 200b, ..., and transmits the estimation results 46a, 46b, ... together to the terminal apparatus 300.

By the intervention of the server 400 for insurance service broker, the user may simultaneously request a plurality of automobile insurance service companies to do estimation, and acquire the respective estimation results 46a, 46b, .... The user 32 may select a desired service from the plurality of estimation results 46a, 46b, ....

### [Fourth embodiment]

Next, a fourth embodiment is described. According to the fourth embodiment, an access destination for receiving the driving data may be determined without writing URL to the header of the access ticket.

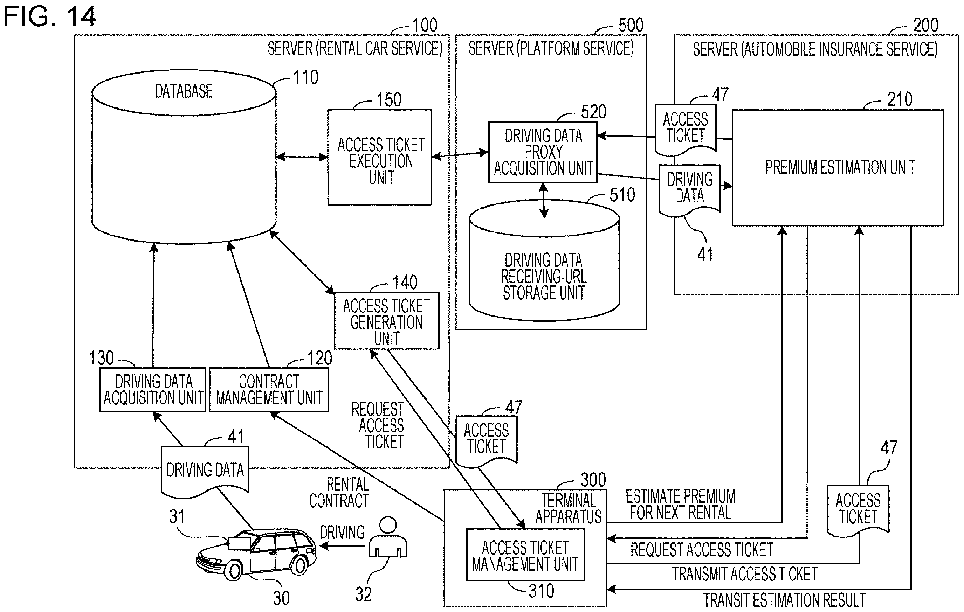

FIG. 14 is a view illustrating an example of a system according to the fourth embodiment. The fourth embodiment is different from the second embodiment in that, in the processing in the server 100, the URL indicating the access ticket execution unit 150 is described in the header in the access ticket 47. According to the fourth embodiment, the access ticket generation unit 140 sets an identifier (service ID) of the service offered to the user 32, to the header of the access ticket 47.

The system according to the fourth embodiment is provided with a server 500 that performs a platform service for executing the processing of acquiring the driving data from the server 100 for rental car service. The server 500 has a driving data receiving-URL storage unit 510 and a driving data proxy acquisition unit 520. The driving data receiving-URL storage unit 510 associates the service ID with the URL indicating the source for the driving data 41 acquired when the service represented by the service ID is offered.

The premium estimation unit 210 of the server 200 for automobile insurance service acquires the access ticket 47 from the terminal apparatus 300 in the same manner as in the second embodiment. The premium estimation unit 210 transmits the acquired access ticket 47 to the server 500. In the server 500, referring to the driving data receiving-URL storage unit 510, the driving data proxy acquisition unit 520 acquires a driving data receiving-URL corresponding to the service ID indicated in the access ticket 47. Then, the driving data proxy acquisition unit 520 transmits the access ticket 47 to the acquired URL, to acquire the driving data 41. The driving data proxy acquisition unit 520 transmits the acquired driving data 41 to the server 200 for automobile insurance service.

In preparing proxy acquisition of the driving data on the user 32, the driving data proxy acquisition unit 520 of the server 500 acquires the driving data receiving-URL from the server 100 for rental car service.

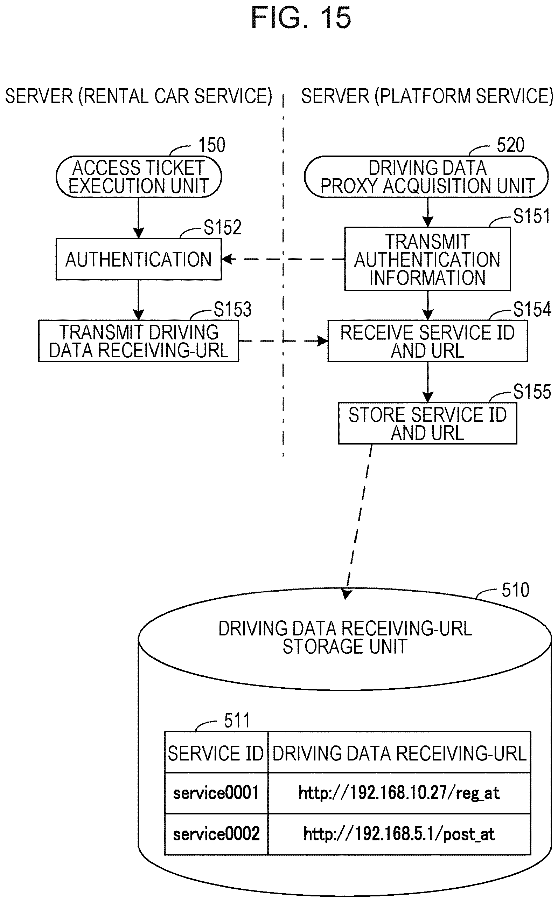

FIG. 15 is a sequence diagram illustrating an example of a procedure of driving data receiving-URL acquisition processing. For example, it is assumed that the authentication information (the user ID and the password) on the user 32 is previously registered in the server 500. Then, the driving data proxy acquisition unit 520 transmits the authentication information on the user 32 to the server 100 (Step S151). The access ticket execution unit 150 of the server 100 performs user authentication of the user 32 having an account based on the authentication information (Step S152). Then, the access ticket execution unit 150 transmits a set of the service ID of the service offered to the user 32 and the driving data receiving-URL identifying the access ticket execution unit 150 to the server 500 (Step S153). The driving data proxy acquisition unit 520 of the server 500 receives the set of the service ID and the driving data receiving-URL (Step S154). Then, the driving data proxy acquisition unit 520 stores the set of the service ID and the driving data receiving-URL in the driving data receiving-URL storage unit 510 (Step S155). For example, the driving data receiving-URL storage unit 510 stores a URL management table 511. The driving data proxy acquisition unit 520 adds a new record including the received set of the service ID and the driving data receiving-URL to the URL management table 511.

Next, driving data acquisition processing via the server 500 for platform service is described.

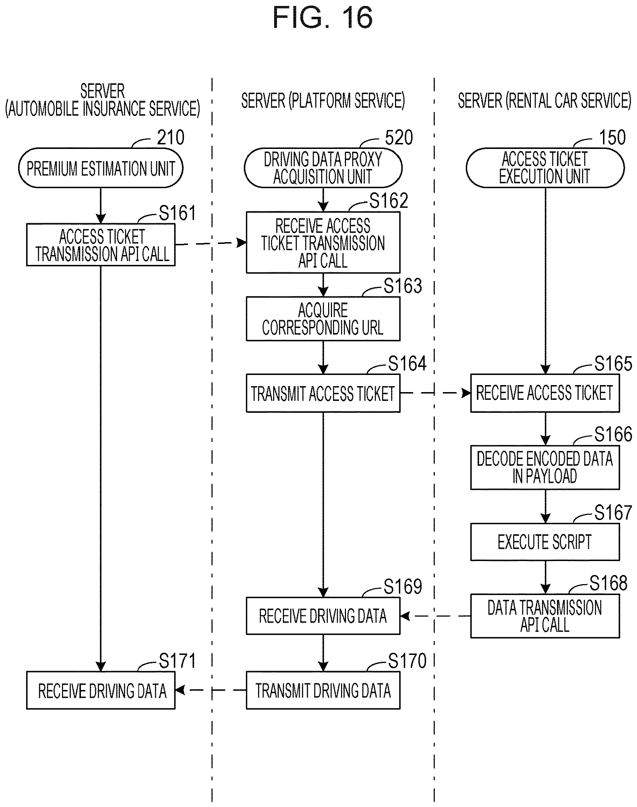

FIG. 16 is a sequence diagram illustrating an example of a procedure of the driving data acquisition processing according to the fourth embodiment. When receiving the access ticket 47 from the terminal apparatus 300, the premium estimation unit 210 of the server 200 for automobile insurance service sends an access ticket transmission (application programming interface) API call to the server 500 (Step S161). The access ticket transmission API call includes the access ticket 47. The driving data proxy acquisition unit 520 of the server 500 receives the access ticket transmission API call from the premium estimation unit 210 (Step S162). The driving data proxy acquisition unit 520 acquires the service ID from the header of the access ticket 47 included in the access ticket transmission API call, and acquires the URL corresponding to the service ID from the access ticket receiving-URL storage unit 510 (Step S163). The driving data proxy acquisition unit 520 transmits the access ticket 47 to the acquired URL. The transmitted access ticket 47 is received by the access ticket execution unit 150 of the server 100 (Step S165).

The access ticket execution unit 150 of the server 100 decodes encoded data in the payload of the access ticket 47, and generates the script (Step S166). The access ticket execution unit 150 executes the generated script (Step S167). The driving data 41 is acquired by executing the script. Then, the access ticket execution unit 150 sends a data transmission API call to the server 500 (Step S168). The data transmission API call includes the driving data 41.

The driving data proxy acquisition unit 520 of the server 500 receives the driving data 41 included in the data transmission API call (Step S169). The driving data proxy acquisition unit 520 transmits the received driving data to the server 200 (Step S170). The premium estimation unit 210 of the server 200 receives the driving data 41 (Step S171).

In this manner, even if the access ticket 47 does not include the URL indicating the access ticket execution unit 150, the server 200 may pass the access ticket 47 acquired from the terminal apparatus 300 to the access ticket execution unit 150, and acquire the driving data 41.

### [Fifth embodiment]

Next, a fifth embodiment is described. According to the fifth embodiment, a platform for managing user's access tickets is provided.

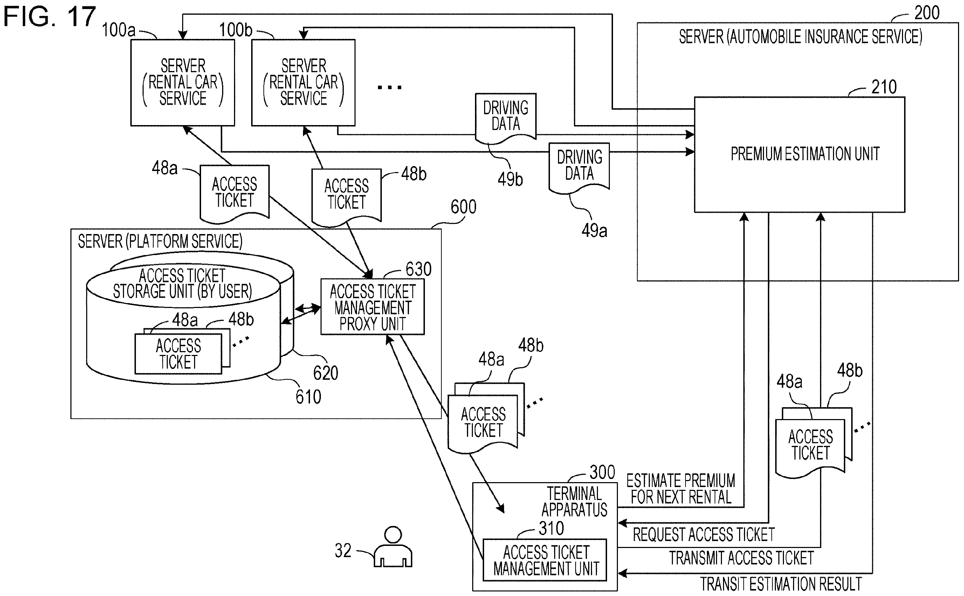

FIG. 17 is a view illustrating an example of a system according to the fifth embodiment. In the example illustrated in FIG. 17, the user 32 has rented rental cars from a plurality of rental car service-offering companies, and servers 100a, 100b, ... of the rental car service-offering companies hold the driving data on the user 32.

A server 600 of a company providing the platform service is connected to the servers 100a, 100b, ... for rental car service and the terminal apparatus 300 via a network. The server 600 has access ticket storage units 610, 620 by user and an access ticket management proxy unit 630.

The access ticket storage unit 610 stores access tickets 48a, 48b, ... indicating the data access right of the user 32. Similarly, the access ticket storage unit 620 stores the access ticket indicating the data access right of a user not illustrated.

The access ticket management proxy unit 630 manages the access tickets by user. For example, each of the servers 100a, 100b, ... for rental car service collects the driving data on the user 32 and then, transmits access tickets 48a, 48b, ... indicating the access right to the driving data, to the server 600 for platform service. For example, the servers 100a, 100b, ... transmit the access tickets when the rental period of the rental car of the user 32 has passed.

In the server 600, the access ticket management proxy unit 630 receives the access ticket 48a, 48b, .... The access ticket management proxy unit 630 stores the received access tickets 48a, 48b, ... in the access ticket storage unit 610 corresponding to the user 32. For example, the access ticket management proxy unit 630 has an API execution function using the user ID as an argument. In this case, the servers 100a, 100b, ... send an API call using the user ID as the argument. The access ticket management proxy unit 630 receives the API call, and stores the access ticket in the access ticket storage unit corresponding to the user ID indicated by the argument in the API call. In response to the access ticket request from the terminal apparatus 300, the access ticket management proxy unit 630 transmits the access tickets 48a, 48b, ... to the terminal apparatus 300.

The access ticket management unit 310 of the terminal apparatus 300 accesses the server 600, and acquires the access tickets 48a, 48b, ... indicating the access right to the own driving data. Then, at estimation of the premiums, the access ticket management unit 310 transmits the access ticket 48a, 48b, ... to the server 200 for automobile insurance service. It is assumed that the headers of the access tickets 48a, 48b, ... each include the URL identifying the source for the driving data. The premium estimation unit 210 of the server 200 transmits the access tickets 48a, 48b, ... to the respective URLs indicated in the headers. The plurality of servers 100a, 100b, ... transmit driving data 49a, 49b, ... on the user 32 to the server 200. The premium estimation unit 210 of the server 200 determines the driving tendency of the user 32 based on the driving data 49a, 49b, ..., and calculates the premiums. Then, the premium estimation unit 210 transmits the premium estimation results to the terminal apparatus 300.

In this manner, the server 600 for platform service may manage access tickets about a plurality of services, thereby easily acquiring driving data in a plurality of rental car services.

The platform service only has to provide the access tickets at any time when the user wants. In the example illustrated in FIG. 17, the method of managing the access tickets on the server 600 is described. However, for example, the access tickets may be managed by using an application software in the terminal apparatus 300. In this case, in response to the access ticket request at estimation of the premium, the user 32 selects the access ticket to be transmitted from among the access tickets stored in the terminal apparatus 300. The terminal apparatus 300 transmits the access ticket selected by the user to the server 200 for automobile insurance service.

It is convenient to provide the user 32 with information that is a ground for selecting the access ticket. Thus, the servers 100a, 100b, ... may add information about contents of the access tickets to the access tickets. In this case, when accepting the selection of the access ticket from the user 32, the terminal apparatus 300 displays the information about contents of each access ticket. This enables the user 32 to select the access ticket as desired. The information about contents of the access ticket may be service name, for example, in the case of rental car, rental period, car name, and the like. The information may be included in the header of the access ticket. Alternatively, the terminal apparatus 300 may acquire the information about contents of the access tickets, separately from the access tickets, from the servers 100a, 100b, ... or the server 600.

### [Sixth embodiment]

Next, a sixth embodiment is described. According to the sixth embodiment, in an overseas tour service, the access right to data using the access ticket is managed. According to the sixth embodiment, when the user 32 participates in a tour, using the access ticket, the access right to reservation data on airplane and hotel is given to travel agency, planning companies of optional tour, and so on.

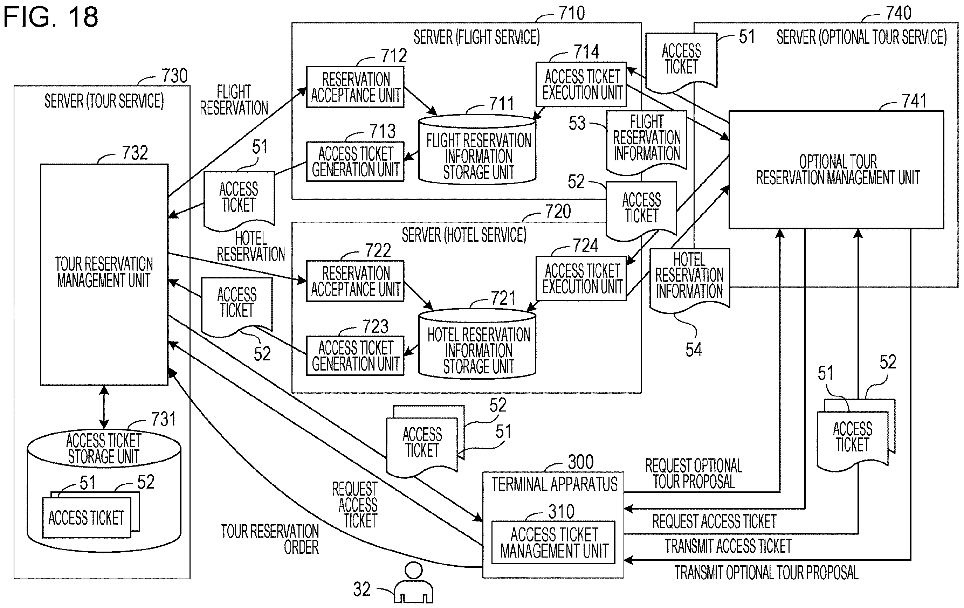

FIG. 18 is a view illustrating an example of a system according to the sixth embodiment. According to the sixth embodiment, a plurality of servers 710, 720, 730, and 740 and the terminal apparatus 300 execute processing in cooperation with each other.

The server 710 is a server computer for flight service managed by an airline. The server 710 has a flight reservation information storage unit 711, a reservation acceptance unit 712, an access ticket generation unit 713, and an access ticket execution unit 714. The flight reservation information storage unit 711 stores information indicating contents of reservation of an airplane seat (flight reservation information). The reservation acceptance unit 712 accepts reservation of the airplane seat. The access ticket generation unit 713 generates an access ticket 51 indicating the access right to the flight reservation information. The access ticket execution unit 714 executes a script included in the access ticket 51, to acquire flight reservation information 53 on the user 32 from the flight reservation information storage unit 711.

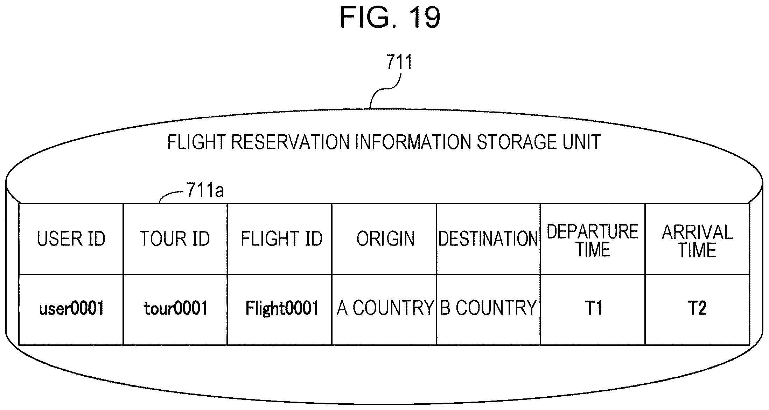

FIG. 19 is a view illustrating an example of the flight reservation information storage unit. The flight reservation information storage unit 711 stores, for example, a flight reservation management table 711a. A record including user ID, tour ID, flight ID, origin, destination, departure time, and arrival time for each flight reservation is registered in the flight reservation management table 711a.

Hereinafter, description is made with reference to FIG. 18 again.

The server 720 is a server computer for hotel service managed by a hotel operating company. The server 720 has a hotel reservation information storage unit 721, a reservation acceptance unit 722, an access ticket generation unit 723, and an access ticket execution unit 724. The hotel reservation information storage unit 721 stores information indicating contents of reservation of hotel (hotel reservation information). The reservation acceptance unit 722 accepts the hotel reservation. The access ticket generation unit 723 generates an access ticket 52 indicating the access right to the hotel reservation information. The access ticket execution unit 724 executes a script included in the access ticket 52, and acquires hotel reservation information 54 on the user 32 from the hotel reservation information storage unit 721.

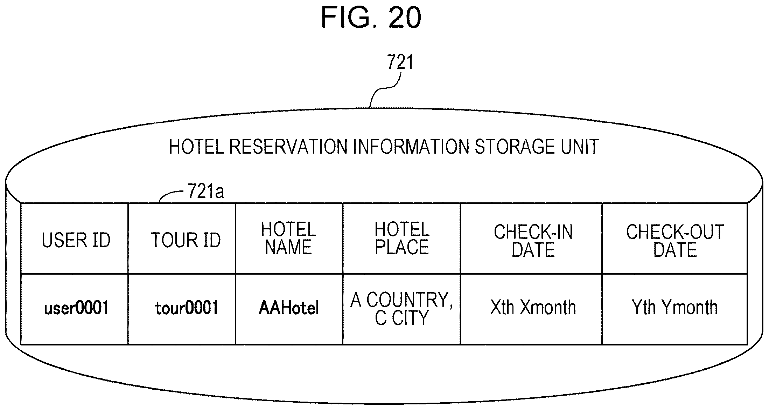

FIG. 20 is a view illustrating an example of a hotel reservation information storage unit. The hotel reservation information storage unit 721 stores, for example, a hotel reservation management table 721a. A record including user ID, tour ID, hotel name, hotel place, check-in date, and check-out date for each reservation is registered in the hotel reservation management table 721a.

Hereinafter, description is made with reference to FIG. 18 again.

The server 730 is a server computer for tour service managed by a tour planning company. The server 730 has an access ticket storage unit 731 and a tour reservation management unit 732. The access ticket storage unit 731 stores access tickets 51, 52 for each customer. In response to an order of the tour from the user 32, the tour reservation management unit 732 executes processing of booking the airplane seat and a hotel as a place to stay. The tour reservation management unit 732 also executes processing of acquiring the access ticket.

The server 740 is a server computer for optional tour service managed by an optional tour planning company. The server 740 has an optional tour reservation management unit 741. Based on the flight reservation information 53 and the hotel reservation information 54 on the user 32, the optional tour reservation management unit 741 determines optional tours in which the user 32 may participate, and presents the optional tours to the user 32.

The user 32 accesses the server 730 for tour service, for example, by using the terminal apparatus 300, and applies to reserve the tour. In response to the application for reservation of the tour from the terminal apparatus 300, the tour reservation management unit 732 of the server 730 requests the server 710 for flight service to reserve the airplane seat (flight reservation). In response to the request of flight reservation, the reservation acceptance unit 712 of the server 710 reserves the airplane seat for the user 32. Further, the reservation acceptance unit 712 stores the flight reservation information in the flight reservation information storage unit 711. When the flight reservation is completed, the access ticket generation unit 713 generates the access ticket 51 indicating the access right to the flight reservation information, and transmits the access ticket 51 to the server 730. The access ticket 51 includes a script that described a command to acquire the flight reservation information for the user 32.

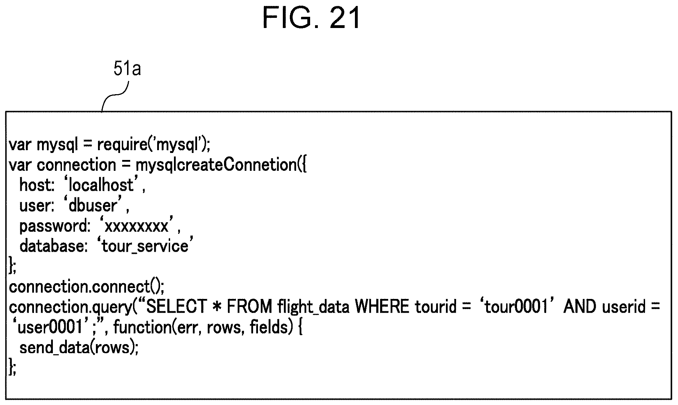

FIG. 21 is a view illustrating an example of the script included in the access ticket of the flight reservation information. For example, a script 51a includes an SQL statement (SELECT ^{∗} FROM flight_data WHERE tourid = 'tour0001' AND userid = 'user0001';) that designates the tour ID and the user ID, and acquires the flight reservation information.

Hereinafter, description is made with reference to FIG. 18 again.

Further, in response to an order of the tour from the terminal apparatus 300, the tour reservation management unit 732 requests the server 720 for hotel service to reserve a hotel room (hotel reservation). In response to the request of hotel reservation, the reservation acceptance unit 722 of the server 720 reserves the hotel room stayed by the user 32. Further, the reservation acceptance unit 722 stores the hotel reservation information in the hotel reservation information storage unit 721. When the hotel reservation is completed, the access ticket generation unit 723 generates the access ticket 52 indicating the access right to the hotel reservation information, and transmits the access ticket 52 to the server 730. The access ticket 52 includes a script that describes a command to acquire the hotel reservation information on the user 32.

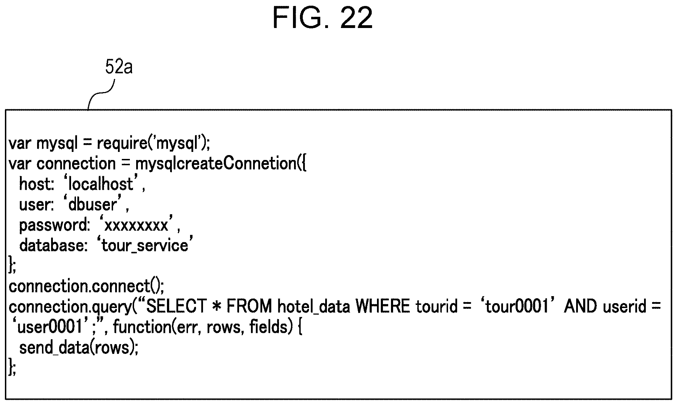

FIG. 22 is a view illustrating an example of a script included in the access ticket of the hotel reservation information. For example, a script 52a includes an SQL statement (SELECT ^{∗} FROM hotel_data WHERE tourid = 'tour0001' AND userid = 'user0001';) that designates the tour ID and the user ID, and acquires the hotel reservation information.

Hereinafter, description is made with reference to FIG. 18 again.

In the server 730, the access tickets 51, 52 transmitted from the servers 710, 720 are received by the tour reservation management unit 732. The tour reservation management unit 732 stores the received access tickets 51, 52 in the access ticket storage unit 731.

Here, it is assumed that the user 32 is considering participating in an optional tour at a staying place. In this case, the user 32 applies to reserve a tour, and uses the terminal apparatus 300 to access the server 740 for optional tour service. Then, the user 32 inputs an instruction to display optional tours in which the user may participate on the terminal apparatus 300. Then, the access ticket management unit 310 of the terminal apparatus 300 requests the server 740 to propose optional tours.

The request to propose the optional tours from the terminal apparatus 300 is received by the optional tour reservation management unit 741 of the server 740. When receiving the request to propose the optional tours, the optional tour reservation management unit 741 transmits the access ticket request to the terminal apparatus 300.

In the terminal apparatus 300, the access ticket management unit 310 receives the access ticket request. Then, the access ticket management unit 310 transmits the access ticket request to the server 730. In response to the access ticket request from the terminal apparatus 300, the tour reservation management unit 732 of the server 730 acquires the access tickets 51, 52 about the tour reserved by the user 32 from the access ticket storage unit 731. Then, the tour reservation management unit 732 transmits the acquired access tickets 51, 52 to the terminal apparatus 300.

The access ticket management unit 310 of the terminal apparatus 300 receives the access tickets 51, 52 from the server 730. Then, the access ticket management unit 310 transmits the access tickets 51, 52 to the server 740.

In the server 740 for optional tour service, the optional tour reservation management unit 741 receives the access tickets 51, 52. Then, the optional tour reservation management unit 741 transmits the access ticket 51 to the server 710 for flight service. In the server 710, the access ticket execution unit 714 receives the access ticket 51. The access ticket execution unit 714 executes the script 51a included in the payload of the access ticket 51 (see FIG. 21). As a result, the access ticket execution unit 714 acquires the flight reservation information 53 on the user 32 from the flight reservation information storage unit 711. The access ticket execution unit 714 transmits the acquired flight reservation information 53 to the server 740.

The optional tour reservation management unit 741 transmits the access ticket 52 to the server 720 for hotel service. In the server 720, the access ticket execution unit 724 receives the access ticket 52. The access ticket execution unit 724 executes the script 52a included in the payload of the access ticket 52 (see FIG. 22). As a result, the access ticket execution unit 724 acquires the hotel reservation information 54 on the user 32 from the hotel reservation information storage unit 721. The access ticket execution unit 724 transmits the acquired hotel reservation information 54 to the server 740.

The optional tour reservation management unit 741 of the server 740 receives the flight reservation information 53 transmitted from the server 710. The optional tour reservation management unit 741 receives the hotel reservation information 54 transmitted from the server 720. Based on the flight reservation information 53 and the hotel reservation information 54, the optional tour reservation management unit 741 recognizes a rough tour schedule of the user 32. Then, according to the tour schedule of the user 32, the optional tour reservation management unit 741 extracts optional tours in which the user 32 may participate from a prepared optional tour list. The optional tour reservation management unit 741 transmits information on the extracted optional tour as optional tour proposal information to the terminal apparatus 300.

The access ticket management unit 310 of the terminal apparatus 300 displays optional tour information that is the optional tour proposal information on a monitor. Based on the displayed optional tour information, the user 32 selects a desired optional tour, and applies to participate in the optional tour.

In this manner, the user 32 may only pass the access tickets 51, 52 to the server 740 for optional tour service, thereby receiving a proposal for optional tours suitable for the tour that the user participate in. This may facilitate selection of the optional tour.

In the example illustrated in FIG. 18, the terminal apparatus 300 acquires the access tickets 51, 52 from the server 730. However, the terminal apparatus 300 may acquire the access tickets 51, 52 from each of the servers 710, 720.

### [Seventh embodiment]

Next, a seventh embodiment is described. According to the second to sixth embodiments, the access right to data stored in the database is handled. However, the access right to resources other than data may be managed using the access ticket. Thus, according to the seventh embodiment, a device is controlled by a script included in the payload of the access ticket.

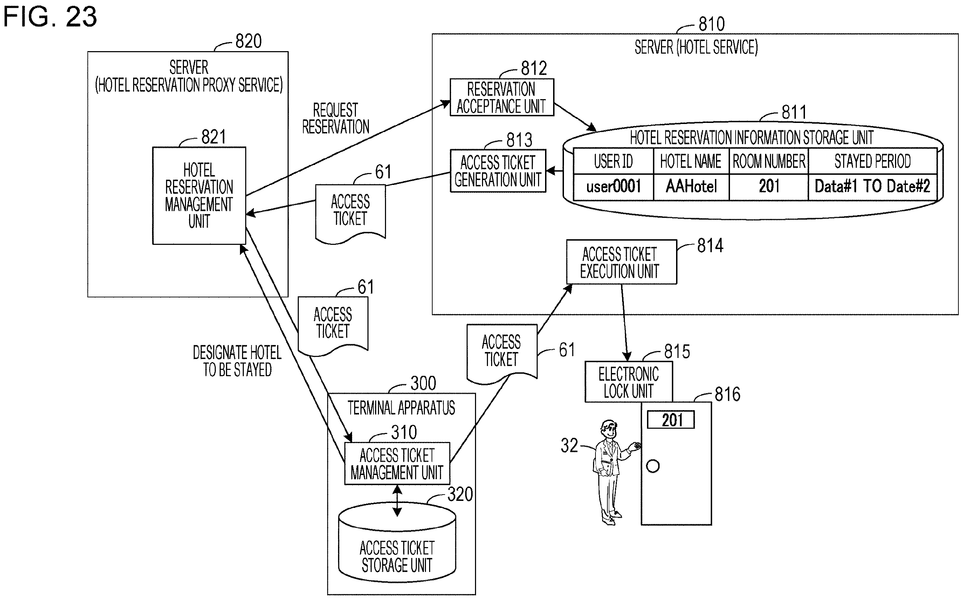

FIG. 23 is a view illustrating an example of a system according to the seventh embodiment. According to the seventh embodiment, a plurality of servers 810, 820 and the terminal apparatus 300 perform processing in cooperation with each other.

The server 810 is a server computer for hotel service managed by a hotel operating company. The server 810 has a hotel reservation information storage unit 811, a reservation acceptance unit 812, an access ticket generation unit 813, and an access ticket execution unit 814.

The hotel reservation information storage unit 811 stores reservation information about a hotel room. For example, the hotel reservation information storage unit 811 associates the identifier (user ID) of the user 32 who reserves the hotel with information such as the name of the stayed hotel, the room number of the reserved room, and stay period, as reservation information.

The reservation acceptance unit 812 accepts the hotel room, and stores the reservation information in the hotel reservation information storage unit 811. Based on the hotel reservation information, the access ticket generation unit 813 generates an access ticket 61 for unlocking a door 816 of the room reserved by the user 32. The access ticket execution unit 814 is connected to an electronic lock unit 815 of the door 816. The electronic lock unit 815 is a device for electronically locking and unlocking the door 816. When receiving the access ticket 61, the access ticket execution unit 814 executes a script included in the access ticket 61, thereby transmitting an unlocking instruction to the electronic lock unit 815. In response to the unlocking instruction, the electronic lock unit 815 unlocks the door 816.

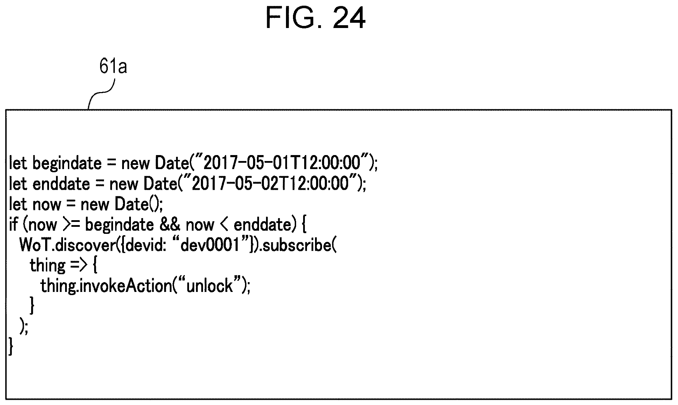

FIG. 24 is a view illustrating an example of a script for unlocking a room door. A script 61a illustrated in FIG. 24 is stored in a payload of the access ticket 61. First two lines in the script 61a represent an available period of the access ticket 61. The first line represents the use start data and time, and the second line represents the use end data and time. If a following statement falls within the available period, it is a statement that unlocks a key.

```
           if (now >= begindate && now < enddate) {
           WoT.discover({devid:"dev0001"}).subscribe(
            thing =>{thing.invokeAction("unlock");
```

Exacting this statement calls API that tries to find the device having the ID "dev0001", resulting in that "thing" is obtained as an instance of the device. Then, for the instance, Action "unlock" is executed. As a result, the door 816 is unlocked.

Hereinafter, description is made with reference to FIG. 23 again.

The server 820 is a server computer for hotel reservation proxy service managed by a company offering the hotel reservation proxy service. The server 820 has a hotel reservation management unit 821. According to the designation of a hotel stayed by the user 32 from the terminal apparatus 300 of the user 32, the hotel reservation management unit 821 accesses the server 810 of the hotel, and reserves a room of the hotel. The hotel reservation management unit 821 receives the access ticket 61 for unlocking a key of the reserved room from the server 810, and transmits the access ticket 61 to the terminal apparatus 300.

The terminal apparatus 300 has an access ticket storage unit 320 in addition to the access ticket management unit 310. The access ticket storage unit 320 stores the access ticket 61. In response to an input from the user 32, the access ticket management unit 310 transmits a designation of the hotel to be stayed to the server 820, and acquires the access ticket 61. The access ticket management unit 310 stores the acquired access ticket 61 in the access ticket storage unit 320. According to the instruction from the user 32, the access ticket management unit 310 reads the access ticket 61 from the access ticket storage unit 320, and transmits the access ticket 61 to the server 810.

In such system, the user 32 first operates the terminal apparatus 300 to select a hotel to be stayed. Then, the access ticket management unit 310 of the terminal apparatus 300 transmits the designation of a hotel to be stayed to the server 820. The hotel reservation management unit 821 of the server 820 transmits a reservation request to the server 810 of the designated hotel. In the server 810, the reservation acceptance unit 812 accepts the reservation, and stores contents of the reservation in the hotel reservation information storage unit 811. Then, the access ticket generation unit 813 generates the access ticket 61, and transmits the access ticket 61 to the server 820. When receiving the access ticket 61, the hotel reservation management unit 821 transmits the access ticket 61 to the terminal apparatus 300. In the terminal apparatus 300, the access ticket management unit 310 stores the access ticket 61 in the access ticket storage unit 320. This completes the reservation of the hotel room.

When reaching the hotel on the very day of staying, the user 32 operates the terminal apparatus 300 in front of the stayed room, and inputs an instruction to unlock the door 816. Then, the terminal apparatus 300 transmits the access ticket 61 to the server 810. The access ticket execution unit 814 of the server 810 executes a script 61a included in the access ticket 61. If the execution data falls within an available period of the access ticket 61, the access ticket execution unit 814 transmits an instruction to unlock the electronic lock unit 815. As a result, the door 816 is unlocked.

As described above, according to the seventh embodiment, an object for controlling the device based on a device ID is acquired without acquiring data using the access ticket 61. Then, the server 810 calls the API of the object to actually control the device. That is, the access ticket 61 according to the seventh embodiment does not indicate the access right to refer to data, but indicates a right to unlock the electronic lock unit 815.

In this manner, the user 32 may unlock the door 816 using the access ticket 61 without receiving a key at a reception of the hotel. For example, if a common private house is rented to a tourist, it is difficult to offer an excellent service as offered at the hotel reception. Thus, by transmitting the access ticket 61 for unlocking the room key to the tourist in advance in the system illustrated in FIG. 24, the time and effort for passing of the room key may be reduced.

### [Eighth embodiment]

Next, an eighth embodiment is described. According to the eighth embodiment, users of the access ticket are limited.

According to the second to seventh embodiments, by transmitting the access ticket to a server, irrespective of transmitter, the script included in the access ticket is executed without authentication. This is advantageous in terms of convenience. However, if the access ticket is copied without any restriction, the reliability of the system is lowered. Thus, according to the eighth embodiment, the user who instructs transmission of the access ticket is authenticated to limit the users of the access ticket.

The user of the access ticket is managed in a server prepared as a platform. Thus, to manage the user, the user is previously registered in the server that functions as the platform.

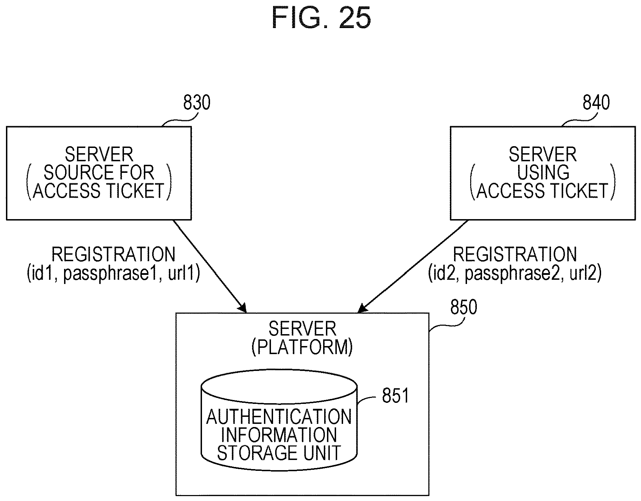

FIG. 25 is a view illustrating an example of user registration processing according to the eighth embodiment. For example, a server 830 that is a source for the access ticket transmits authentication information (service ID and password) of an administrator of the server 830 and an URL identifying the server 830 on the network to a server 850 that function as the platform. The server 850 registers the information transmitted from the server 830 to an authentication information storage unit 851.

A server 840 that may use the access ticket transmits authentication information (the service ID and the password) of an administrator of the server 840 and an URL identifying the server 840 on the network to the server 850. The server 850 registers the information transmitted from the server 840 in the authentication information storage unit 851.

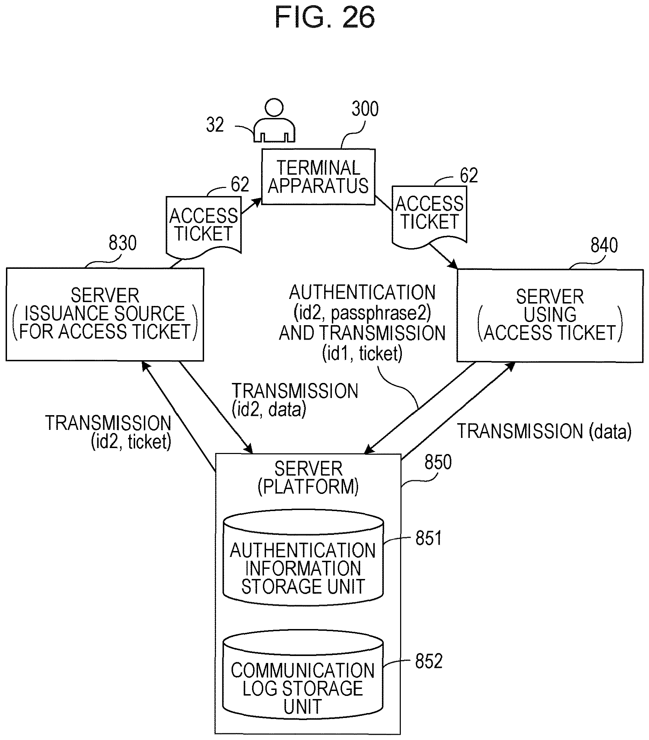

FIG. 26 is a view illustrating the use state of the access ticket according to the eighth embodiment. As in the second embodiment, the user 32 acquires an access ticket 62 from the server 830. At this time, the server 830 adds a service ID of a service using the access ticket to a header of the access ticket 62. In the example illustrated in FIG. 26, the service ID (id2) corresponding to the server 840 is added.

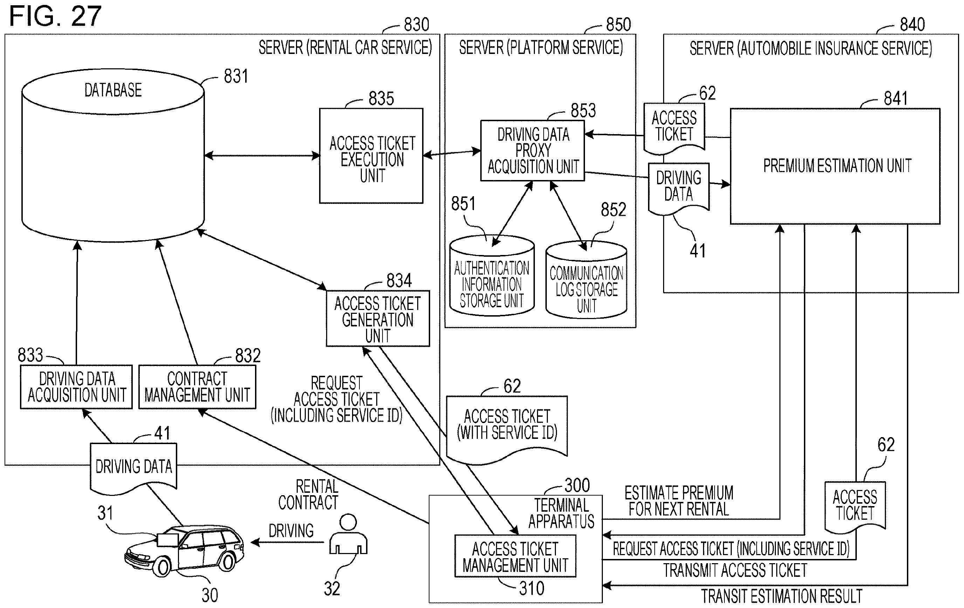

As illustrated in FIG. 27, the server 850 may be provided with a communication log storage unit 852. The server 850 records communication history with other servers 830, 840 (information indicating communication contents) in the communication log storage unit 852. By recording the communication history in the communication log storage unit 852, the access ticket and how data acquired using the access ticket moves may be recognized. Recognizing the transmission/reception state of the access ticket and data facilitates investigation in case of information leakage.

To suppress forgery of the header, the server 830 may a signature of the server 830 to the access ticket 62. The server 840 may include the service ID in the payload in place of the header.

Further, the terminal apparatus 300 rather than the server 830 may add the service ID added to the header of the access ticket 62. In this case, the terminal apparatus 300 adds the signature to the access ticket 62. If the terminal apparatus 300 adds the signature, for verification of correctness of the signature made by the server 830, the terminal apparatus 300 transmits a certificate to the server 830. The server 830 stores the certificate, and verifies the access ticket 62 transmitted from the server 850 based on the certificate.

The function of limiting users using the access ticket by means of the service ID as illustrated in FIG. 26 may be implemented in the system according to any one of the second to seventh embodiments. A system capable of acquiring driving data on the rental car only in a server operated in a particular automobile insurance service provider is described below.

FIG. 27 is a view illustrating an example of the system having the function of limiting users of the access ticket. In the example illustrated in FIG. 27, the server 830 is a server computer for rental car service. The server 840 is a server computer for automobile insurance service. The server 850 is a server computer for platform service.

The server 830 has a database 831, a contract management unit 832, a driving data acquisition unit 833, an access ticket generation unit 834, and an access ticket execution unit 835. The elements of the server 830 have the same functions as those in the server 100 according to the second embodiment in FIG. 4. The access ticket generation unit 834 further may add the service ID indicating the server that may use the access ticket 62 to the access ticket 62.

The server 840 has a premium estimation unit 841. The premium estimation unit 841 has the same function as that of the server 200 according to the second embodiment in FIG. 4, as well as the function of adding the service ID to the access request. That is, when requesting the access ticket 62 from the terminal apparatus 300, the server 840 notifies the own service ID to the terminal apparatus 300. The terminal apparatus 300 transmits the access ticket request, to which the service ID of the server 840 is added, to the server 100.

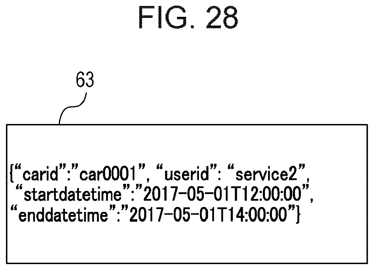

FIG. 28 is a view illustrating an example of an access ticket request including the service ID. As illustrated in FIG. 28, the service ID ("userid":"service2") that is an ID of the user using the access ticket is set to the access ticket request 63. The access ticket request 63 indicates the start date and time ("startdatetime":"2017-05-01T12:00:00") and the end date and time ("enddatetime":"2017-05-01T14:00:00") in the accessible period.

When receiving the access ticket request 63, the server 830 generates the access ticket 62 having a header including information on the service ID and the accessible period in the access ticket request 63, and transmits the access ticket 62 to the terminal apparatus 300.

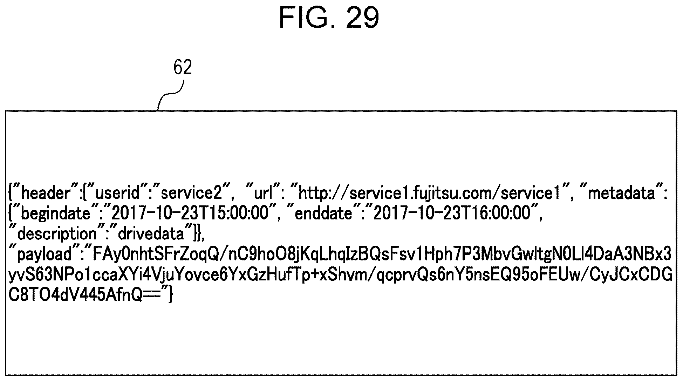

FIG. 29 is a view illustrating an example of the access ticket including the service ID. The service ID ("userid":"service2") that is an ID of the user using the access ticket is set to the access ticket 62 illustrated in FIG. 29. Data in the payload of the access ticket 62 is encoded.

Premium estimation processing using the access ticket in the system illustrated in FIG. 27 is described below.

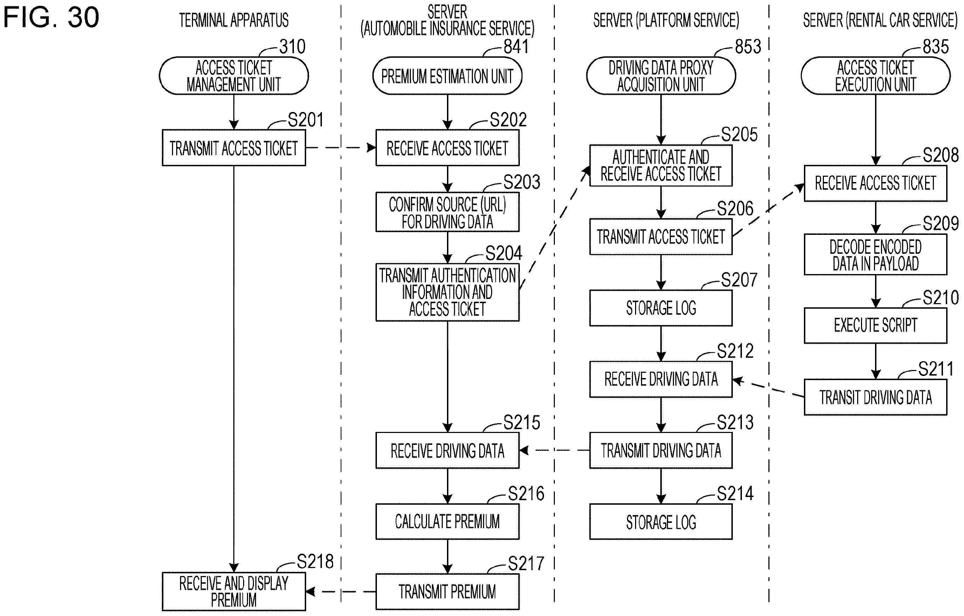

FIG. 30 is a sequence diagram illustrating an example of a procedure of the premium estimation processing using the access ticket according to the eighth embodiment.

The access ticket management unit 310 of the terminal apparatus 300 transmits the access ticket 62 with service ID to the server 840 for automobile insurance service (Step S201). The premium estimation unit 841 of the server 840 receives the access ticket 62 (Step S202). Next, the premium estimation unit 841 confirms the URL of the source for driving data based on the header of the access ticket 62 (Step S203). Then, the premium estimation unit 841 transmits the authentication information and the access ticket 62 to the server 850 for platform service (Step S204). For example, the premium estimation unit 841 calls the API of the server 850 for platform, and transmits the access ticket 62. At this time, the premium estimation unit 841 designates the source for the access ticket as the URL confirmed in Step S203.

Based on the authentication information of the server 840, a driving data proxy acquisition unit 853 of the server 850 authenticates the server 840, and receives the access ticket 62 (Step S205). The driving data proxy acquisition unit 853 transmits use service information on the service ID of the server 840 and the access ticket to the server 830 for rental car service (Step S206). Then, the driving data proxy acquisition unit 853 stores information on the transferred access ticket 62 in the communication log storage unit 852 (Step S207).

The access ticket execution unit 835 of the server 830 receives the access ticket 62 (Step S208). Next, the access ticket execution unit 835 decodes encoded data in the payload (Step S209). At this time, the access ticket execution unit 835 confirms whether or not the service ID indicated in the header of the access ticket 62 matches the service ID included in the use service information. Then, when the service IDs match each other, the access ticket execution unit 835 decodes encoded data in the payload of the access ticket 62. Then, the access ticket execution unit 835 executes the script obtained by decoding (Step S210). The driving data 41 may be acquired by executing the script. The access ticket execution unit 835 transmits the driving data 41 with the service ID of the server 840 to the server 850 (Step S211).

The driving data proxy acquisition unit 853 of the server 850 receives the driving data 41 with the service ID (Step S212). After that, according to the service ID added to the driving data 41 received from the server 830, the driving data proxy acquisition unit 853 recognizes that the received data is the driving data 41 to be transmitted to the server 840, and transmits the driving data 41 to the server 840 (Step S213). Then, the driving data proxy acquisition unit 853 stores information on the transferred driving data 41 in the communication log storage unit 852 (Step S214).

The premium estimation unit 841 of the server 840 receives the driving data 41 (Step S215). The premium estimation unit 841 calculates the premium for the user 32 based on the driving data 41 (Step S216). Then, the premium estimation unit 841 transmits an estimation result of the calculated premium to the terminal apparatus 300 (Step S217). In the terminal apparatus 300, the access ticket management unit 310 receives the estimation result, and displays the premium indicated in the estimation result on a monitor (Step S218).

In this manner, using the service ID may limit servers capable of using the access ticket 62. This may suppress illegal use of the driving data 41 that is personal information on the user 32.

In the above-mentioned example, the server 850 for platform service authenticates the server 840. However, the server 830 for rental car service may authenticate the server 840.

### [Ninth embodiment (not covered by the claimed invention)]

Next, a ninth embodiment not covered by the claimed invention is described. According to the ninth embodiment, only an index is described in a payload, and a command itself is managed in another place. For example, a server that issues the access ticket associates a command with a command ID identifying the command, and holds them.

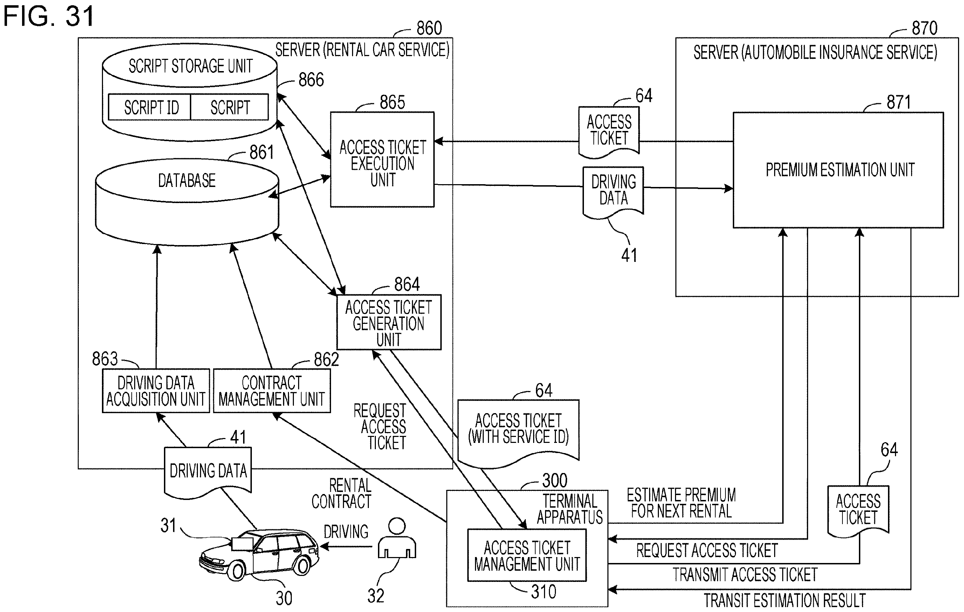

FIG. 31 is a view illustrating an example of a system according to the ninth embodiment. In the example illustrated in FIG. 31, a server 860 is a server computer for rental car service. A server 870 is a server computer for automobile insurance service.

The server 860 has a database 861, a contract management unit 862, a driving data acquisition unit 863, an access ticket generation unit 864, an access ticket execution unit 865, and a script storage unit 866. The database 861, the contract management unit 862, and the driving data acquisition unit 863 have the same functions as those in the server 100 according to the second embodiment in FIG. 4.

When receiving the access ticket request, the access ticket generation unit 864 adds a script ID to a script for acquiring the driving data 41 in the database 861, and stores the script in the script storage unit 866. Then, the access ticket generation unit 864 generates an access ticket 64 including the script ID in the payload.

When receiving the access ticket 64, the access ticket execution unit 865 acquires a script corresponding to the script ID included in the access ticket 64 from the script storage unit 866. Next, the access ticket execution unit 865 executes the script acquired from the script storage unit 866 to acquire the driving data 41 from the database 861. Next, the access ticket execution unit 865 transmits the driving data 41 to the server 870 that is a source for the access ticket 64.

The script storage unit 866 stores a set of the script ID and the script.

The server 870 for automobile insurance service has a premium estimation unit 871. The premium estimation unit 871 has the same function as the premium estimation unit in the server 200 according to the second embodiment in FIG. 4.

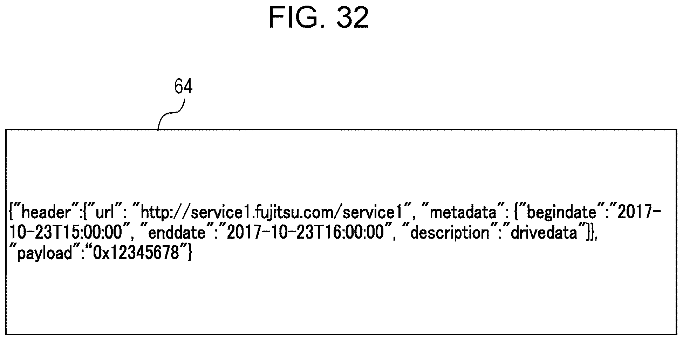

FIG. 32 is a view illustrating an example of the access ticket including the script ID. Only the script ID ("0x12345678") is set to the payload of the access ticket 64.

Premium estimation processing using the access ticket in the system illustrated in FIG. 31 is described below.

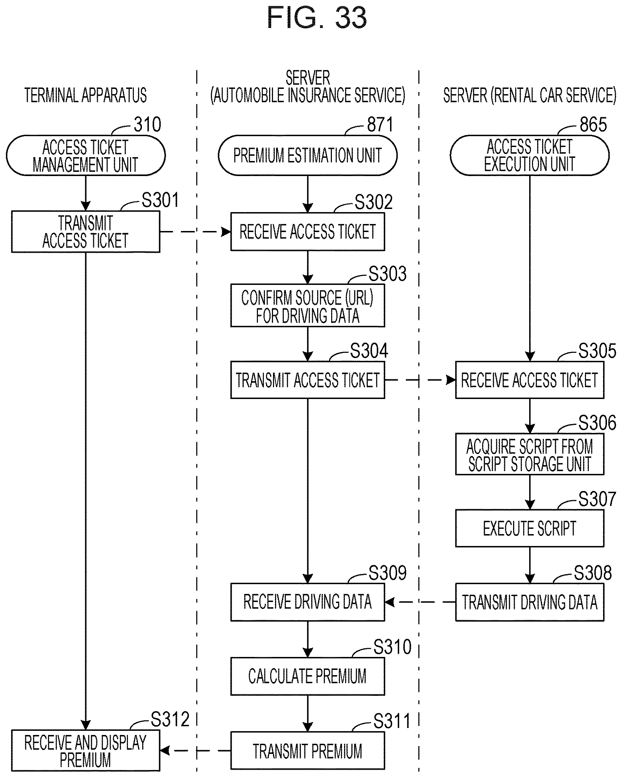

FIG. 33 is a sequence diagram illustrating an example of a procedure of premium estimation processing an access ticket according to a ninth embodiment.

The access ticket management unit 310 of the terminal apparatus 300 transmits the access ticket 64 with script ID to the server 870 for automobile insurance service (Step S301). The premium estimation unit 871 of the server 870 receives the access ticket 64 (Step S302). Next, based on the header of the access ticket 64, the premium estimation unit 871 confirms an URL of a source for the driving data (Step S303). Then, the premium estimation unit 871 transmits the access ticket 64 to the server 860 for rental car service (Step S304).

The access ticket execution unit 865 of the server 860 receives the access ticket 64 (Step S305). Next, the access ticket execution unit 865 acquires a script corresponding to the script ID in the payload from the script storage unit 866 (Step S306). Then, the access ticket execution unit 865 executes the acquired script (Step S307). The driving data 41 is acquired by executing the script. The access ticket execution unit 865 transmits the driving data 41 to the server 870 (Step S308).

The premium estimation unit 871 of the server 870 receives the driving data 41 (Step S309). Based on the driving data 41, the premium estimation unit 871 calculates the premium for the user 32 (Step S310). Then, the premium estimation unit 871 transmits an estimation result indicating the calculated premium to the terminal apparatus 300 (Step S311). In the terminal apparatus 300, the access ticket management unit 310 receives the estimation result, and displays the premium indicated in the estimation result on a monitor (Step S312).

In this manner, the script that acquires the driving data 41 on the user 32 may be executed without being taken out of the outside of the server 860, according to the access ticket 64 from the server 870. Since the script is not taken out of the server 860, contents of the script is not illegally rewritten.

### [Other embodiments]

The access ticket may be passed via an API prepared by the platform. A server that transmits the access ticket (for example, server for automobile insurance service) designates the service ID of a destination server (for example, server for rental car service) as an argument of the API. The server for platform acquires an URL corresponding to the service ID, and transmits the access ticket to the URL. This may illegal copy of the access ticket.

Such illegal used may be also suppressed by limiting the number of times the access ticket is used. For example, the server that issues the access ticket (for example, server for rental car service) adds different IDs to headers of different access tickets, and stores the available number of times for each ID. Then, when receiving the access ticket, the server confirms the added ID, and counts the number of times the access ticket for each ID is used, and if the count exceeds the available number of times, does not transmit data.

A server that uses the access ticket (for example, server for automobile insurance service) may transmit an encoding key together with the access ticket to a server that is a source for the access ticket (for example, server for rental car service). In this case, the source server of the access ticket encodes data acquired based on the access ticket using the encoding key, and transmits the encoded data to the server using the access ticket. The server using the access ticket decodes the received data and then, performs a service using the data. This may improve the security of personal data on the user 32.

Although the embodiments have been described, each of the elements in the embodiments may be replaced with another element having the same function. Any other suitable structure or process may be added.

Further, two or more configurations (features) in the above-mentioned embodiments may be combined with each other. The scope of protection is defined by the claims.

### LIST OF REFERENCES

- 1, 2: automobile
- 1a, 2a: IoT device
- 3: first apparatus
- 4: second apparatus
- 5: acquisition request
- 6: ticket
- 6a: command information
- 7: personal data
- 8: network
- 9: user
- 10: information processing apparatus
- 11: storage unit
- 11a: available resource information
- 11b, 11c: acquired data
- 12: processing unit

## Claims

1. An information processing apparatus (860) comprising:
a storage unit (861) configured to store available resource information indicating a resource available to a user; and
a processing unit (864, 865) configured to:
upon receiving from a first apparatus (300) an acquisition request of a ticket (64), generate the ticket (64) including command information indicating a command to be executed in accessing of the resource available to the user, based on the available resource information, wherein the generated ticket indicates a use right of the resource available to the user and the first apparatus (300) is being a terminal apparatus used by the user;
transmit the ticket to the first apparatus (300); and
upon receiving the ticket from a second apparatus (870) that acquired the ticket via the first apparatus (300), execute the command indicated by the command information included in the ticket (64), wherein executing the command comprises acquiring from the storage unit (861) and transmitting to the second apparatus (870) personal data of the user, or executing the command comprises controlling equipment connected to the information processing apparatus (860),
wherein the processing unit (864, 865) is configured to encode a script using a key and store the key in a memory, the script including the command, generate the ticket (64) including the encoded script as the command information and, upon receiving the ticket (64) from the second apparatus (870), use the key stored in the memory to decode the encoded script to generate the script, wherein executing the command indicated by the command information comprises executing the command included in the script.

2. The information processing apparatus (860) according to claim 1, wherein
the storage unit (861) stores personal data of the user as the resource available to the user, and
the processing unit (864, 865) is configured to:
when receiving the acquisition request from the first apparatus (300), generate the ticket (64) including the command information, the command information indicating an acquisition command to acquire the personal data from the storage unit (861), and transmit the ticket (64) to the first apparatus (300); and
when receiving the ticket (64) from the second apparatus (870), acquire the personal data from the storage unit (861) according to the acquisition command, and transmit the acquired personal data to the second apparatus (870).

3. The information processing apparatus (860) according to claim 1, wherein
the resource available to the user is equipment connected to the information processing apparatus (860), and
the processing unit (864, 865) is configured to:
when receiving the acquisition request from the first apparatus (300), generate the ticket (64) including the command information, the command information indicating a control command to control the equipment, and transmit the ticket (64) to the first apparatus (300); and
when receiving the ticket (64) from the second apparatus (870), control the equipment according to the control command.

4. The information processing apparatus (860) according to claim 3, wherein
the available resource information indicates a room available to the user,
the equipment is a locking device for locking and unlocking of a door for entry to the room, and
the processing unit (864, 865) is configured to generate the ticket (64) including the command information, the command information indicating a control command to instruct the equipment to unlock the door.

5. An information processing method executed by a computer, the method comprising:
upon receiving from a first apparatus an acquisition request of a ticket, generating the ticket including command information, the command information indicating a command to be executed in accessing of the resource available to the user, based on available resource information indicating the resource available to the user, wherein the generated ticket indicates a use right of the resource available to the user and the first apparatus is a terminal apparatus used by the user;
transmitting the ticket to the first apparatus; and
upon receiving the ticket from a second apparatus that acquired the ticket via the first apparatus, executing the command indicated by the command information included in the ticket, wherein executing the command comprises acquiring from a storage unit and transmitting to the second apparatus personal data of the user, or executing the command comprises controlling equipment connected to the computer,
wherein the method further comprises encoding a script using a key and storing the key in a memory, the script including the command, generating the ticket including the encoded script as the command information and, upon receiving the ticket from the second apparatus, using the key stored in the memory to decode the encoded script to generate the script, wherein executing the command indicated by the command information comprises executing the command included in the script.

6. An information processing program which, when executed by a computer, causes the computer to perform a process comprising:
upon receiving from a first apparatus an acquisition request of a ticket, generating the ticket including command information, the command information indicating a command to be executed in accessing of the resource available to the user, based on available resource information indicating the resource available to the user, wherein the generated ticket indicates a use right of the resource available to the user and the first apparatus is a terminal apparatus used by the user;
transmitting the ticket to the first apparatus; and
upon receiving the ticket from a second apparatus that acquired the ticket via the first apparatus, execute the command indicated by the command information included in the ticket, wherein executing the command comprises acquiring from a storage unit and transmitting to the second apparatus personal data of the user, or executing the command comprises controlling equipment connected to the computer,
wherein the process further comprises encoding a script using a key and storing the key in a memory, the script including the command, generating the ticket including the encoded script as the command information and, upon receiving the ticket from the second apparatus, using the key stored in the memory to decode the encoded script to generate the script, wherein executing the command indicated by the command information comprises executing the command included in the script.

## Patentansprüche

1. Informationsverarbeitungsvorrichtung (860), umfassend:
eine Speichereinheit (861), die dazu ausgelegt ist, Informationen über verfügbare Ressourcen zu speichern, die eine für einen Benutzer verfügbare Ressource angeben; und
eine Verarbeitungseinheit (864, 865), die ausgelegt ist zum:
nach Empfang, von einer ersten Vorrichtung (300), einer Anfrage zum Erwerb eines Tickets (64), Erzeugen des Tickets (64), das Befehlsinformationen aufweist, die einen Befehl angeben, der beim Zugreifen auf die für den Benutzer verfügbare Ressource auszuführen ist, basierend auf den verfügbaren Ressourceninformationen, wobei das erzeugte Ticket ein Nutzungsrecht der für den Benutzer verfügbaren Ressource angibt und die erste Vorrichtung (300) ein von dem Benutzer verwendetes Endgerät ist;
Senden des Tickets an die erste Vorrichtung (300); und
nach Empfangen des Tickets von einer zweiten Vorrichtung (870), die das Ticket über die erste Vorrichtung (300) erworben hat, Ausführen des Befehls, der durch die Befehlsinformationen angegeben wird, die in dem Ticket (64) enthalten sind, wobei das Ausführen des Befehls Erwerben, von der Speichereinheit (861), und Senden von persönlichen Daten des Benutzers an die zweite Vorrichtung (870) umfasst, oder Ausführen des Befehls Steuern von Ausrüstung, die mit der Informationsverarbeitungsvorrichtung (860) verbunden ist, umfasst,
wobei die Verarbeitungseinheit (864, 865) ausgelegt ist zum Codieren eines Skripts unter Verwendung eines Schlüssels und Speichern des Schlüssels in einem Speicher, wobei das Skript den Befehl aufweist, Erzeugen des Tickets (64), dass das codierte Skript aufweist, als die Befehlsinformationen, und, nach Empfang das Ticket (64) von der zweiten Vorrichtung (870), Verwenden des in dem Speicher gespeicherten Schlüssels, um das codierte Skript zu decodieren, um das Skript zu erzeugen, wobei das Ausführen des durch die Befehlsinformationen angegebenen Befehls Ausführen des in dem Skript enthaltenen Befehls umfasst.

2. Informationsverarbeitungsvorrichtung (860) nach Anspruch 1, wobei die Speichereinheit (861) personenbezogene Daten des Benutzers als die dem Benutzer zur Verfügung stehende Ressource speichert, und
die Verarbeitungseinheit (864, 865) ausgelegt ist zum:
bei Empfang der Erwerbsanfrage von der ersten Vorrichtung (300), Erzeugen des Tickets (64), das die Befehlsinformationen aufweist, wobei die Befehlsinformationen einen Erwerbsbefehl zum Erwerben der persönlichen Daten von der Speichereinheit (861) angibt, und Senden des Tickets (64) an die erste Vorrichtung (300); und
bei Empfang des Tickets (64) von der zweiten Vorrichtung (870), Erwerben der persönlichen Daten von der Speichereinheit (861) gemäß dem Erwerbsbefehl, und Senden der erworbenen persönlichen Daten an die zweite Vorrichtung (870).

3. Informationsverarbeitungsvorrichtung (860) nach Anspruch 1, wobei die dem Benutzer zur Verfügung stehende Ressource eine Ausrüstung ist, die mit der Informationsverarbeitungsvorrichtung (860) verbunden ist, und
die Verarbeitungseinheit (864, 865) ausgelegt ist zum:
bei Empfang der Erwerbsanfrage von der ersten Vorrichtung (300), Erzeugen des Tickets (64), das die Befehlsinformationen aufweist, wobei die Befehlsinformationen einen Steuerbefehl zum Steuern der Ausrüstung angeben, und Senden des Tickets (64) an die erste Vorrichtung (300); und
bei Empfang des Tickets (64) von der zweiten Vorrichtung (870), Steuern der Ausrüstung gemäß dem Steuerbefehl.

4. Informationsverarbeitungsvorrichtung (860) nach Anspruch 3, wobei die verfügbaren Ressourceninformationen einen für den Benutzer verfügbaren Raum angeben,
die Ausrüstung eine Schließvorrichtung zum Ver- und Entriegeln einer Tür zum Betreten des Raums ist, und
die Verarbeitungseinheit (864, 865) dazu ausgelegt ist, das Ticket (64) zu erzeugen, das die Befehlsinformationen angibt, wobei die Befehlsinformationen einen Steuerbefehl angeben, um die Ausrüstung anzuweisen, die Tür zu entriegeln.

5. Informationsverarbeitungsverfahren, das von einem Computer ausgeführt wird, wobei das Verfahren umfasst:
nach Empfang einer Erwerbsanfrage eines Tickets von einer ersten Vorrichtung, Erzeugen des Tickets, das Befehlsinformationen aufweist, wobei die Befehlsinformationen einen Befehl angeben, der beim Zugreifen auf die für den Benutzer verfügbare Ressource auszuführen ist, basierend auf verfügbaren Ressourceninformationen, die die für den Benutzer verfügbare Ressource angeben, wobei das erzeugte Ticket ein Nutzungsrecht der für den Benutzer verfügbaren Ressource angibt und die erste Vorrichtung ein von dem Benutzer verwendetes Endgerät ist;
Senden des Tickets an das erste Vorrichtung; und
nach Empfang des Tickets von einer zweiten Vorrichtung, die das Ticket über die erste Vorrichtung erworben hat, Ausführen des Befehls, der durch die in dem Ticket enthaltenen Befehlsinformationen angegeben wird, wobei das Ausführen des Befehls Erwerben, von einer Speichereinheit, und Senden von persönlichen Daten des Benutzers an die zweite Vorrichtung umfasst, oder das Ausführen des Befehls Steuern von Ausrüstung, die mit dem Computer verbunden ist, umfasst,
wobei das Verfahren ferner Codieren eines Skripts unter Verwendung eines Schlüssels und Speichern des Schlüssels in einem Speicher, wobei das Skript den Befehl aufweist, Erzeugen des Tickets, das das codierte Skript aufweist, als die Befehlsinformationen, und, nach Empfang des Tickets von der zweiten Vorrichtung, Verwenden des in dem Speicher gespeicherten Schlüssels, um das codierte Skript zu decodieren, um das Skript zu erzeugen, umfasst, wobei das Ausführen des durch die Befehlsinformationen angegebenen Befehls Ausführen des in dem Skript enthaltenen Befehls umfasst.

6. Informationsverarbeitungsprogramm, das, wenn es von einem Computer ausgeführt wird, bewirkt, dass der Computer einen Prozess durchführt, der umfasst:
nach Empfang, von einem ersten Vorrichtung, einer Anfrage zum Erwerb eines Tickets, Erzeugen des Tickets, das Befehlsinformationen aufweist, wobei die Befehlsinformationen einen Befehl angeben, der beim Zugreifen auf die für den Benutzer verfügbare Ressource ausgeführt werden soll, basierend auf verfügbaren Ressourceninformationen, die die für den Benutzer verfügbare Ressource angeben, wobei das erzeugte Ticket ein Nutzungsrecht der für den Benutzer verfügbaren Ressource angibt und die erste Vorrichtung ein von dem Benutzer verwendetes Endgerät ist;
Senden des Tickets an die erste Vorrichtung; und
nach Empfang des Tickets von einer zweiten Vorrichtung, die das Ticket über die erste Vorrichtung erworben hat, Ausführen des Befehl, der durch die in dem Ticket enthaltenen Befehlsinformationen angegeben wird, wobei das Ausführen des Befehls Erwerben, von einer Speichereinheit, und Senden von persönlichen Daten des Benutzer an eine zweite Vorrichtung umfasst, oder das Ausführen des Befehls Steuern von Ausrüstung, die mit dem Computer verbunden ist, umfasst,
wobei der Prozess ferner Codieren eines Skripts unter Verwendung eines Schlüssels und Speichern des Schlüssels in einem Speicher umfasst, wobei das Skript den Befehl aufweist, Erzeugen des Tickets, das das codierte Skript aufweist, als die Befehlsinformationen, und, nach Empfang des Tickets von der zweiten Vorrichtung, Verwenden des in dem Speicher gespeicherten Schlüssels, um das codierte Skript zu decodieren, um das Skript zu erzeugen, wobei das Ausführen des durch die Befehlsinformationen angegebenen Befehls Ausführen des in dem Skript enthaltenen Befehls umfasst.

## Revendications

1. Un appareil de traitement d'informations (860) comprenant :
une unité de stockage (861) configurée pour stocker des informations de ressource disponible indiquant une ressource disponible pour un utilisateur ; et
une unité de traitement (864, 865) configurée pour :
à la réception d'une demande d'acquisition d'un ticket (64) d'un premier appareil (300), générer le ticket (64) comprenant des informations de commande indiquant une commande à exécuter pour accéder à la ressource disponible pour l'utilisateur, sur la base des informations de ressource disponible, dans lequel le ticket généré indique un droit d'utilisation de la ressource disponible pour l'utilisateur et le premier appareil (300) est un appareil terminal utilisé par l'utilisateur ;
transmettre le ticket au premier appareil (300) ; et
à la réception du ticket d'un deuxième appareil (870) qui a acquis le ticket via le premier appareil (300), exécuter la commande indiquée par les informations de commande incluses dans le ticket (64), dans lequel l'exécution de la commande comprend l'acquisition de l'unité de stockage (861) et la transmission au deuxième appareil (870) de données personnelles de l'utilisateur, ou l'exécution de la commande comprend la commande d'un équipement connecté à l'appareil de traitement d'informations (860),
dans lequel l'unité de traitement (864, 865) est configurée pour coder un script en utilisant une clé et stocker la clé dans une mémoire, le script comprenant la commande, générer le ticket (64) comprenant le script codé en tant qu'informations de commande et, lors de la réception du ticket (64) du deuxième appareil (870), utiliser la clé stockée dans la mémoire pour décoder le script codé afin de générer le script, dans lequel l'exécution de la commande indiquée par les informations de commande comprend l'exécution de la commande incluse dans le script.

2. L'appareil de traitement d'informations (860) selon la revendication 1, dans lequel
l'unité de stockage (861) stocke des données personnelles de l'utilisateur en tant que ressource disponible pour l'utilisateur, et
l'unité de traitement (864, 865) est configurée pour :
lors de la réception de la demande d'acquisition du premier appareil (300), générer le ticket (64) comprenant les informations de commande, les informations de commande indiquant une commande d'acquisition pour acquérir les données personnelles de l'unité de stockage (861), et transmettre le ticket (64) au premier appareil (300) ; et
lors de la réception du ticket (64) du deuxième appareil (870), acquérir les données personnelles de l'unité de stockage (861) selon la commande d'acquisition, et transmettre les données personnelles acquises au deuxième appareil (870).

3. L'appareil de traitement d'informations (860) selon la revendication 1, dans lequel
la ressource disponible pour l'utilisateur est un équipement connecté à l'appareil de traitement d'informations (860), et
l'unité de traitement (864, 865) est configurée pour :
lors de la réception de la demande d'acquisition du premier appareil (300), générer le ticket (64) comprenant les informations de commande, les informations de commande indiquant une commande de contrôle pour contrôler l'équipement, et transmettre le ticket (64) au premier appareil (300) ; et
lors de la réception du ticket (64) du deuxième appareil (870), commander l'équipement selon la commande de contrôle.

4. L'appareil de traitement d'informations (860) selon la revendication 3, dans lequel
les informations de ressource disponible indiquent une pièce disponible pour l'utilisateur,
l'équipement est un dispositif de verrouillage pour le verrouillage et le déverrouillage d'une porte pour l'entrée dans la pièce, et
l'unité de traitement (864, 865) est configurée pour générer le ticket (64) comprenant les informations de commande, les informations de commande indiquant une commande de contrôle pour ordonner à l'équipement de déverrouiller la porte.

5. Un procédé de traitement d'informations exécuté par un ordinateur, le procédé comprenant :
à la réception d'une demande d'acquisition d'un ticket d'un premier appareil, la génération du ticket comprenant des informations de commande, les informations de commande indiquant une commande à exécuter pour accéder à la ressource disponible pour l'utilisateur, sur la base des informations de ressource disponible indiquant la ressource disponible pour l'utilisateur, dans lequel le ticket généré indique un droit d'utilisation de la ressource disponible pour l'utilisateur et le premier appareil est un appareil terminal utilisé par l'utilisateur ;
la transmission du ticket au premier appareil ; et
à la réception du ticket d'un deuxième appareil qui a acquis le ticket via le premier appareil, l'exécution de la commande indiquée par les informations de commande incluses dans le ticket, dans lequel l'exécution de la commande comprend l'acquisition d'une unité de stockage et la transmission au deuxième appareil de données personnelles de l'utilisateur, ou l'exécution de la commande comprend la commande d'un équipement connecté à l'ordinateur,
dans lequel le procédé comprend en outre le codage d'un script en utilisant une clé et le stockage de la clé dans une mémoire, le script comprenant la commande, la génération du ticket comprenant le script codé en tant qu'informations de commande et, lors de la réception du ticket du deuxième appareil, l'utilisation de la clé stockée dans la mémoire pour décoder le script codé afin de générer le script, dans lequel l'exécution de la commande indiquée par les informations de commande comprend l'exécution de la commande incluse dans le script.

6. Un programme de traitement d'informations qui, lorsqu'il est exécuté par un ordinateur, amène l'ordinateur à exécuter un procédé comprenant :
à la réception d'une demande d'acquisition d'un ticket d'un premier appareil, la génération du ticket comprenant des informations de commande, les informations de commande indiquant une commande à exécuter pour accéder à la ressource disponible pour l'utilisateur, sur la base des informations de ressource disponible indiquant la ressource disponible pour l'utilisateur, dans lequel le ticket généré indique un droit d'utilisation de la ressource disponible pour l'utilisateur et le premier appareil est un appareil terminal utilisé par l'utilisateur ;
la transmission du ticket au premier appareil ; et
à la réception du ticket d'un deuxième appareil qui a acquis le ticket via le premier appareil, exécuter la commande indiquée par les informations de commande incluses dans le ticket, dans lequel l'exécution de la commande comprend l'acquisition de l'unité de stockage et la transmission au deuxième appareil de données personnelles de l'utilisateur, ou l'exécution de la commande comprend la commande d'un équipement connecté à l'ordinateur,
dans lequel le procédé comprend en outre le codage d'un script en utilisant une clé et le stockage de la clé dans une mémoire, le script comprenant la commande, la génération du ticket comprenant le script codé en tant qu'informations de commande et, lors de la réception du ticket du deuxième appareil, l'utilisation de la clé stockée dans la mémoire pour décoder le script codé afin de générer le script, dans lequel l'exécution de la commande indiquée par les informations de commande comprend l'exécution de la commande incluse dans le script.
